# EUROPEAN PATENT SPECIFICATION

(11) **EP 3 408 883 B1**
(45) Date of publication and mention of the grant of the patent: **08.05.2024**
(21) Application number: 16886119.3
(22) Date of filing: 13.12.2016
(51) Int. Cl.: H01M 4/04, H01M 4/36, H01M 4/62, H01M 4/139, H01M 4/1391, H01M 4/1397, H01M 10/0525

(54) **METHOD OF PREPARING BATTERY ELECTRODES**
VERFAHREN ZUR HERSTELLUNG VON BATTERIEELEKTRODEN
PROCÉDÉ DE PRÉPARATION D'ÉLECTRODES DE BATTERIE

(30) Priority: 18.01.2016 US 201662279841 P
(43) Date of publication of application: 05.12.2018
(60) Divisional application: 20214419.2
(73) Proprietor: GRST International Limited, Hong Kong (CN)
(72) Inventor: SHEN, Peihua, Guangzhou Guangdong 511340 (CN); WONG, Sing Hung Eric, New Territories, Hong Kong (CN)
(74) Representative: Becker Kurig & Partner Patentanwälte mbB
(86) International application number: PCT/CN2016/109723
(87) International publication number: WO 2017/124859

(56) References cited:
- CN-A- 1 505 185
- CN-A- 1 815 777
- CN-A- 101 276 909
- CN-A- 101 295 804
- CN-A- 103 618 063
- JP-A- 2000 090 917
- US-A1- 2009 317 718
- K. SOEDA ET AL: "Alginic Acid as a New Aqueous Slurry-Based Binder for Cathode Materials of LIB", ECS TRANSACTIONS, vol. 64, no. 18, 30 April 2015 (2015-04-30), pages 13-22, XP055610027, US ISSN: 1938-6737, DOI: 10.1149/06418.0013ecst
- BENJAMIN C. CHURCH ET AL: "Corrosion of aluminum electrodes in aqueous slurries for lithium-ion batteries", JOURNAL OF MATERIALS SCIENCE, vol. 49, no. 8, 22 January 2014 (2014-01-22), pages 3234-3241, XP055608968, Dordrecht ISSN: 0022-2461, DOI: 10.1007/s10853-014-8028-3
- S. Y. LI ET AL: "Effect of aqueous-based cathode slurry pH and immersion time on corrosion of aluminum current collector in lithium-ion batteries : Effect of aqueous-based slurry on corrosion of aluminum", MATERIALS AND CORROSION, vol. 67, no. 9, 4 April 2016 (2016-04-04), pages 978-987, XP055370483, ISSN: 0947-5117, DOI: 10.1002/maco.201608843

## Description

### FIELD OF THE INVENTION

This invention relates to lithium-ion batteries in the application of sustainable energy area. More particularly, this invention relates to the use of aqueous-based slurries for preparing battery electrodes.

### BACKGROUND OF THE INVENTION

Lithium-ion batteries (LIBs) have attracted extensive attention in the past two decades for a wide range of applications in portable electronic devices such as cellular phones and laptop computers. Due to rapid market development of electric vehicles (EV) and grid energy storage, high-performance, low-cost LIBs are currently offering one of the most promising options for large-scale energy storage devices.

In general, a lithium ion battery includes a separator, a cathode and an anode. Currently, electrodes are prepared by dispersing fine powders of an active battery electrode material, a conductive agent, and a binder material in an appropriate solvent. The dispersion can be coated onto a current collector such as a copper or aluminum metal foil, and then dried at an elevated temperature to remove the solvent. Sheets of the cathode and anode are subsequently stacked or rolled with the separator separating the cathode and anode to form a battery.

Polyvinylidene fluoride (PVDF) has been the most widely used binder materials for both cathode and anode electrodes. Compared to non-PVDF binder materials, PVDF provides a good electrochemical stability and high adhesion to the electrode materials and current collectors. However, PVDF can only dissolve in some specific organic solvents such as N-Methyl-2-pyrrolidone (NMP) which requires specific handling, production standards and recycling of the organic solvents in an environmentally-friendly way. This will incur significant costs in the manufacturing process.

The use of aqueous solutions instead of organic solvents is preferred for environmental and handling reasons and therefore water-based slurries have been considered. Water soluble binders such as carboxymethyl cellulose (CMC) and styrene-butadiene rubber (SBR) have been attempted. However, CMC and SBR are generally limited to anode applications.

U.S. Patent No. 8,956,688 B2 describes a method of making a battery electrode. The method comprises measuring the zeta potential of the active electrode material and the conductive additive material; selecting a cationic or anionic dispersant based on the zeta potential; determining the isoelectric point (IEP) of the active electrode material and the conductive additive material; dispersing an active electrode material and a conductive additive in water with at least one dispersant to create a mixed dispersion; treating a surface of a current collector to raise the surface energy of the surface to at least the surface tension of the mixed dispersion; depositing the dispersed active electrode material and conductive additive on a current collector; and heating the coated surface to remove water from the coating. However, the method is complicated, involving measurements of the zeta potential of the active electrode material and the conductive additive material, and isoelectric point (IEP) of the active electrode material and the conductive additive material. Furthermore, an additional surface treatment step for treating the surface of the current collector is required in order to enhance the capacity retention.

U.S. Patent No. 8,092,557 B2 describes a method of making an electrode for a rechargeable lithium ion battery using a water-based slurry having a pH between 7.0 and 11.7, wherein the electrode includes an electro-active material, a (polystyrenebutadiene rubber)-poly (acrylonitrile-co-acrylamide) polymer, and a conductive additive. However, this method does not provide any data for evaluating the electrochemical performance of the electrodes prepared by this method.

U.S. Patent Application No. 2013/0034651 A1 describes a slurry for the manufacture of an electrode, wherein the slurry comprises a combination of at least three of polyacrylic acid (PAA), carboxymethyl cellulose (CMC), styrene-butadiene rubber (SBR) and polyvinylidene fluoride (PVDF) in an aqueous solution and an electrochemically activateable compound. However, the slurry for preparing the cathode electrode comprises acetone or other organic solvents such as NMP and DMAC.

JP 2000090917 A, US 2009/317718 A1 and CN 101276909 A further describe other methods of preparing cathode materials or slurries and making cathodes therefrom.

In view of the above, there is always a need to develop a method for preparing cathode and anode electrodes for lithium-ion battery using a simple, inexpensive and environmentally friendly method.

### SUMMARY OF THE INVENTION

The aforementioned needs are met by the method described in claims 1 and 2. Optional embodiments of the invention are described in the dependent claims.

### BRIEF DESCRIPTION OF THE DRAWINGS

Figure 1 depicts an embodiment of the method disclosed herein.
Figure 2 depicts a SEM image of the surface morphology of Example 1, an embodiment of the coated cathode electrode disclosed herein.
Figure 3 depicts cycling performance of an electrochemical cell containing a cathode and an anode prepared by the method described in Example 2.
Figure 4 depicts cycling performance of an electrochemical cell containing a cathode and an anode prepared by the method described in Example 4.
Figure 5 depicts cycling performance of an electrochemical cell containing a cathode and an anode prepared by the method described in Example 6.
Figure 6 depicts cycling performance of an electrochemical cell containing a cathode and an anode prepared by the method described in Example 8.
Figure 7 depicts cycling performance of an electrochemical cell containing a cathode and an anode prepared by the method described in Example 10.
Figure 8 depicts cycling performance of an electrochemical cell containing a cathode and an anode prepared by the method described in Example 12.
Figure 9 depicts cycling performance of an electrochemical cell containing a cathode and an anode prepared by the method described in Example 14.
Figure 10 depicts cycling performance of an electrochemical cell containing a cathode and an anode prepared by the method described in Example 15.
Figure 11 depicts cycling performance of an electrochemical cell containing a cathode and an anode prepared by the method described in Example 16.
Figure 12 depicts cycling performance of an electrochemical cell containing a cathode and an anode prepared by the method described in Example 17.
Figure 13 depicts cycling performance of an electrochemical cell containing a cathode and an anode prepared by the method described in Example 18.
Figure 14 depicts cycling performance of an electrochemical cell containing a cathode and an anode prepared by the method described in Comparative Example 1.
Figure 15 depicts cycling performance of an electrochemical cell containing a cathode and an anode prepared by the method described in Comparative Example 2.
Figure 16 depicts cycling performance of an electrochemical cell containing a cathode and an anode prepared by the method described in Comparative Example 3.
Figure 17 depicts cycling performance of an electrochemical cell containing a cathode and an anode prepared by the method described in Comparative Example 4.
Figure 18 depicts cycling performance of an electrochemical cell containing a cathode and an anode prepared by the method described in Comparative Example 5.
Figure 19 depicts cycling performance of an electrochemical cell containing a cathode and an anode prepared by the method described in Comparative Example 6.
Figure 20 depicts cycling performance of an electrochemical cell containing a cathode and an anode prepared by the method described in Comparative Example 7.
Figure 21 depicts cycling performance of an electrochemical cell containing a cathode and an anode prepared by the method described in Comparative Example 8.
Figure 22 depicts cycling performance of an electrochemical cell containing a cathode and an anode prepared by the method described in Comparative Example 9.
Figure 23 depicts cycling performance of an electrochemical cell containing a cathode and an anode prepared by the method described in Comparative Example 10.

### DETAILED DESCRIPTION OF THE INVENTION

The term "electrode" refers to a "cathode" or an "anode."

The term "positive electrode" is used interchangeably with cathode. Likewise, the term "negative electrode" is used interchangeably with anode.

The term "acid" includes any molecule or ion that can donate a hydrogen ion to another substance, and/or contain completely or partially displaceable H⁺ ions. Some non-limiting examples of suitable acids include inorganic acids and organic acids. Some non-limiting examples of the inorganic acid include hydrochloric acid, nitric acid, phosphoric acid, sulfuric acid, boric acid, hydrofluoric acid, hydrobromic acid, perchloric acid, hydroiodic acid, and combinations thereof. Some non-limiting examples of the organic acids include acetic acid, lactic acid, oxalic acid, citric acid, uric acid, trifluoroacetic acid, methanesulfonic acid, formic acid, propionic acid, butyric acid, valeric acid, gluconic acid, malic acid, caproic acid, and combinations thereof.

The term "acidic solution" refers to a solution of a soluble acid, having a pH lower than 7.0, lower than 6.5, lower than 6.0, lower than 5.0, lower than 4.0, lower than 3.0, or lower than 2.0. In some embodiments, the pH is greater than 6.0, greater than 5.0, greater than 4.0, greater than 3.0, or greater than 2.0.

The term "pre-treating" as used herein refers to an act of improving or altering the properties of a material, or removing any contaminants in a material by acting upon with some agents, or an act of suspending a material in some solvents.

The term "dispersing" as used herein refers to an act of distributing a chemical species or a solid more or less evenly throughout a fluid.

The term "binder material" refers to a chemical or a substance that can be used to hold the active battery electrode material and conductive agent in place.

The term "homogenizer" refers to an equipment that can be used for homogenization of materials. The term "homogenization" refers to a process of reducing a substance or material to small particles and distributing it uniformly throughout a fluid. Any conventional homogenizers can be used for the method disclosed herein. Some non-limiting examples of the homogenizer include stirring mixers, blenders, mills (e.g., colloid mills and sand mills), ultrasonicators, atomizers, rotor-stator homogenizers, and high pressure homogenizers.

The term "ultrasonicator" refers to an equipment that can apply ultrasound energy to agitate particles in a sample. Any ultrasonicator that can disperse the slurry disclosed herein can be used herein. Some non-limiting examples of the ultrasonicator include an ultrasonic bath, a probe-type ultrasonicator, and an ultrasonic flow cell.

The term "ultrasonic bath" refers to an apparatus through which the ultrasonic energy is transmitted via the container's wall of the ultrasonic bath into the liquid sample.

The term "probe-type ultrasonicator" refers to an ultrasonic probe immersed into a medium for direct sonication. The term "direct sonication" means that the ultrasound is directly coupled into the processing liquid.

The term "ultrasonic flow cell" or "ultrasonic reactor chamber" refers to an apparatus through which sonication processes can be carried out in a flow-through mode. In some embodiments, the ultrasonic flow cell is in a single-pass, multiple-pass or recirculating configuration.

The term "planetary mixer" refers to an equipment that can be used to mix or blend different materials for producing a homogeneous mixture, which consists of a single or double blade with a high speed dispersion blade. The rotational speed can be expressed in unit of rotations per minute (rpm) which refers to the number of rotations that a rotating body completes in one minute.

The term "applying" as used herein in general refers to an act of laying or spreading a substance on a surface.

The term "current collector" refers to a support for coating the active battery electrode material and a chemically inactive high electron conductor for keeping an electric current flowing to electrodes during discharging or charging a secondary battery.

The term "room temperature" refers to indoor temperatures from about 18 °C to about 30 °C, e.g., 18, 19, 20, 21, 22, 23, 24, 25, 26, 27, 28, 29, or 30 °C. In some embodiments, room temperature refers to a temperature of about 20 °C +/- 1 °C or +/- 2 °C or +/- 3 °C. In other embodiments, room temperature refers to a temperature of about 22 °C or about 25 °C.

The term "C rate" refers to the charging or discharging rate of a cell or battery, expressed in terms of its total storage capacity in Ah or mAh. For example, a rate of 1 C means utilization of all of the stored energy in one hour; a 0.1 C means utilization of 10% of the energy in one hour and the full energy in 10 hours; and a 5 C means utilization of the full energy in 12 minutes.

The term "ampere-hour (Ah)" refers to a unit used in specifying the storage capacity of a battery. For example, a battery with 1 Ah capacity can supply a current of one ampere for one hour or 0.5 A for two hours, etc. Therefore, 1 Ampere-hour (Ah) is the equivalent of 3600 coulombs of electrical charge. Similarly, the term "miniampere-hour (mAh)" also refers to a unit of the storage capacity of a battery and is 1/1,000 of an ampere-hour.

The term "doctor blading" refers to a process for fabrication of large area films on rigid or flexible substrates. A coating thickness can be controlled by an adjustable gap width between a coating blade and a coating surface, which allows the deposition of variable wet layer thicknesses.

The term "transfer coating" or "roll coating" refers to a process for fabrication of large area films on rigid or flexible substrates. A slurry is applied on the substrate by transferring a coating from the surface of a coating roller with pressure. A coating thickness can be controlled by an adjustable gap width between a metering blade and a surface of the coating roller, which allows the deposition of variable wet layer thicknesses. In a metering roll system, the thickness of the coating is controlled by adjusting the gap between a metering roller and a coating roller.

The term "battery cycle life" refers to the number of complete charge/discharge cycles a battery can perform before its nominal capacity falls below 80% of its initial rated capacity.

The term "major component" of a composition refers to the component that is more than 50%, more than 55%, more than 60%, more than 65%, more than 70%, more than 75%, more than 80%, more than 85%, more than 90%, or more than 95% by weight or volume, based on the total weight or volume of the composition.

The term "minor component" of a composition refers to the component that is less than 50%, less than 45%, less than 40%, less than 35%, less than 30%, less than 25%, less than 20%, less than 15%, less than 10%, or less than 5% by weight or volume, based on the total weight or volume of the composition.

The term "relatively slow rate" as used herein refers to the loss of solvent from the wet solid in the coated film over a relatively long period of time. In some embodiments, the time required for drying the coated film of a designated coating composition at a relatively slow rate is from about 5 minutes to about 20 minutes.

The term "relatively quick drying rate" as used herein refers to the loss of solvent from the wet solid in the coated film over a relatively short period of time. In some embodiments, the time required for drying the coated film of a designated coating composition at a relatively quick drying rate is from about 1 minute to about 5 minutes.

In the following description, all numbers disclosed herein are approximate values, regardless whether the word "about" or "approximate" is used in connection therewith. They may vary by 1 percent, 2 percent, 5 percent, or, sometimes, 10 to 20 percent. Whenever a numerical range with a lower limit, R^{L}, and an upper limit, R^{U}, is disclosed, any number falling within the range is specifically disclosed. In particular, the following numbers within the range are specifically disclosed: R=R^{L}+k*(R^{U}-R^{L}), wherein k is a variable ranging from 1 percent to 100 percent with a 1 percent increment, *i.e.,* k is 1 percent, 2 percent, 3 percent, 4 percent, 5 percent,..., 50 percent, 51 percent, 52 percent,..., 95 percent, 96 percent, 97 percent, 98 percent, 99 percent, or 100 percent. Moreover, any numerical range defined by two R numbers as defined in the above is also specifically disclosed.

The methods of preparing a battery cathode of the invention are defined respectively in claims 1 and 2.

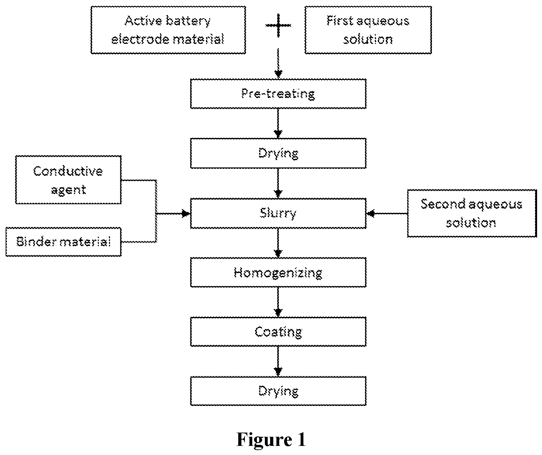

Figure 1 shows an embodiment of the method disclosed herein, in which a first suspension is prepared by pre-treating a cathode material in a first aqueous solution having a pH from about 5.0 to about 8.0 to form a first suspension. The first suspension is then dried to obtain a pre-treated cathode material. A slurry is prepared by mixing the pre-treated cathode material, a conductive agent, and a binder material in a second aqueous solution. Further components may be added. The slurry is then homogenized by a homogenizer to obtain a homogenized slurry. A current collector is coated with the homogenized slurry, and the coated collector is then dried to form the battery cathode.

In certain embodiments, the first suspension is prepared by pre-treating a cathode material in a first aqueous solution having a pH from about 3.0 to about 8.0.

Any temperature that can pre-treat the cathode material can be used herein. In some embodiments, the cathode material can be added to the stirring first aqueous solution at about 14 °C, about 16 °C, about 18 °C, about 20 °C, about 22 °C, about 24 °C, or about 26 °C. In certain embodiments, the pre-treating process can be performed with heating at a temperature from about 30 °C to about 80 °C, from about 35 °C to about 80 °C, from about 40 °C to about 80 °C, from about 45 °C to about 80 °C, from about 50 °C to about 80 °C, from about 55 °C to about 80 °C, from about 55 °C to about 70 °C, from about 45 °C to about 85 °C, or from about 45 °C to about 90 °C. In some embodiments, the pre-treating process can be performed at a temperature below 30 °C, below 25 °C, below 22 °C, below 20 °C, below 15 °C, or below 10 °C.

According to one embodiment of the invention, the cathode material is selected from the group consisting of LiCO₂, LiNiO₂, LiNiₓMn_{y}O₂, Li_{1+z}NiₓMn_{y}Co_{1-x-y}O₂, LiNiₓCo_{y}Al_{z}O₂, LiV₂O₅, LiTiS₂, LiMoS₂, LiMnO₂, LiCrO₂, LiMn₂O₄, LiFeO₂, and combinations thereof, wherein each x is independently from 0.3 to 0.8; each y is independently from 0.1 to 0.45; and each z is independently from 0 to 0.2. According to another embodiment of the invention, the cathode material is LiFePO₄. In certain embodiments, the cathode material is selected from the group consisting of LiCO₂, LiNiO₂, LiNiₓMn_{y}O₂, Li_{1+z}NiₓMn_{y}Co_{1-x-y}O₂ (NMC), LiNiₓCo_{y}Al_{z}O₂, LiV₂O₅, LiTiS₂, LiMoS₂, LiMnO₂, LiCrO₂, LiMn₂O₄, LiFeO₂, and combinations thereof, wherein each x is independently from 0.4 to 0.6; each y is independently from 0.2 to 0.4; and each z is independently from 0 to 0.1.

In certain embodiments, the cathode material is doped with a dopant selected from the group consisting of Fe, Ni, Mn, Al, Mg, Zn, Ti, La, Ce, Sn, Zr, Ru, Si, Ge, and combinations thereof. In some embodiments, the dopant is not Fe, Ni, Mn, Mg, Zn, Ti, La, Ce, Ru, Si, or Ge. In certain embodiments, the dopant is not Al, Sn, or Zr.

In some embodiments, the cathode material comprises or is a core-shell composite comprising a core comprising a lithium transition metal compound and a shell formed by coating the surface of the core with a transition metal oxide. In certain embodiments, the lithium transition metal compound is selected from the group consisting of LiCO₂, LiNiO₂, LiNiₓMn_{y}O₂, Li_{1+z}NiₓMn_{y}Co_{1-x-y}O₂, LiNiₓCo_{y}Al_{z}O₂, LiV₂O₅, LiTiS₂, LiMoS₂, LiMnO₂, LiCrO₂, LiMn₂O₄, LiFeO₂, LiFePO₄, and combinations thereof, wherein each x is independently from 0.3 to 0.8; each y is independently from 0.1 to 0.45; and each z is independently from 0 to 0.2. In some embodiments, the transition metal oxide is selected from the group consisting of Fe₂O₃, MnO₂, Al₂O₃, MgO, ZnO, TiO₂, La₂O₃, CeO₂, SnO₂, ZrO₂, RuO₂, and combinations thereof.

In certain embodiments, the cathode material comprises or is a core-shell composite having a core and shell structure, wherein the core and the shell each independently comprise a lithium transition metal compound selected from the group consisting of LiCO₂, LiNiO₂, LiNiₓMn_{y}O₂, Li_{1+z}NiₓMn_{y}Co_{1-x-y}O₂, LiNiₓCo_{y}Al_{z}O₂, LiV₂O₅, LiTiS₂, LiMoS₂, LiMnO₂, LiCrO₂, LiMn₂O₄, LiFeO₂, LiFePO₄, and combinations thereof, wherein each x is independently from 0.3 to 0.8; each y is independently from 0.1 to 0.45; and each z is independently from 0 to 0.2. In other embodiments, the core and the shell each independently comprise two or more lithium transition metal compounds. The two or more lithium transition metal compounds in the core and the shell may be the same, or may be different or partially different. In some embodiments, the two or more lithium transition metal compounds are uniformly distributed over the core. In certain embodiments, the two or more lithium transition metal compounds are not uniformly distributed over the core.

In some embodiments, each of the lithium transition metal compounds in the core and the shell is independently doped with a dopant selected from the group consisting of Fe, Ni, Mn, Al, Mg, Zn, Ti, La, Ce, Sn, Zr, Ru, Si, Ge, and combinations thereof. In certain embodiments, the core and the shell each independently comprise two or more doped lithium transition metal compounds. In some embodiments, the two or more doped lithium transition metal compounds are uniformly distributed over the core. In certain embodiments, the two or more doped lithium transition metal compounds are not uniformly distributed over the core.

In some embodiments, the diameter of the core is from about 5 µm to about 45 µm, from about 5 µm to about 35 µm, from about 5 µm to about 25 µm, from about 10 µm to about 40 µm, or from about 10 µm to about 35 µm. In certain embodiments, the thickness of the shell is from about 3 µm to about 15 µm, from about 15 µm to about 45 µm, from about 15 µm to about 30 µm, from about 15 µm to about 25 µm, from about 20 µm to about 30 µm, or from about 20 µm to about 35 µm. In certain embodiments, the diameter or thickness ratio of the core and the shell are in the range of 15:85 to 85:15, 25:75 to 75:25, 30:70 to 70:30, or 40:60 to 60:40. In certain embodiments, the volume or weight ratio of the core and the shell is 80:20, 70:30, 60:40, 50:50, 40:60, or 30:70.

In certain embodiments, the first aqueous solution is a solution containing water as the major component and a volatile solvent, such as alcohols, lower aliphatic ketones, lower alkyl acetates or the like, as the minor component in addition to water. According to the invention, the amount of water in the first aqueous solution is at least 50%.In some embodiments, the first aqueous solution consists solely of water, that is, the proportion of water in the first aqueous solution is 100 vol.%.

Any water-miscible solvents can be used as the minor component. Some non-limiting examples of the minor component (*i.e.,* solvents other than water) include alcohols, lower aliphatic ketones, lower alkyl acetates and combinations thereof. Some non-limiting examples of the alcohol include C₂-C₄ alcohols, such as methanol, ethanol, isopropanol, n-propanol, butanol, and combinations thereof. Some non-limiting examples of the lower aliphatic ketones include acetone, dimethyl ketone, and methyl ethyl ketone. Some non-limiting examples of the lower alkyl acetates include ethyl acetate, isopropyl acetate, and propyl acetate.

In certain embodiments, the volatile solvent or the minor component is methyl ethyl ketone, ethanol, ethyl acetate or a combination thereof.

In some embodiments, the first aqueous solution is a mixture of water and one or more water-miscible minor component. In certain embodiments, the first aqueous solution is a mixture of water and a minor component selected from ethanol, isopropanol, n-propanol, t-butanol, n-butanol, and combinations thereof. In some embodiments, the volume ratio of water and the minor component is from about 51:49 to about 100:1.

In certain embodiments, the first aqueous solution is water. Some non-limiting examples of water include tap water, bottled water, purified water, pure water, distilled water, de-ionized water, D₂O, or a combination thereof. In some embodiments, the first aqueous solution is de-ionized water. In certain embodiments, the first aqueous solution is free of alcohol, aliphatic ketone, alkyl acetate, or a combination thereof.

According to one embodiment of the invention, the first aqueous solution is acidic, slightly alkaline, or neutral, and has a pH of about 3.0 to about 8.0. According to another embodiment of the invention, the pH of the first aqueous solution is from about 5.0 to about 8.0.

In certain embodiments, the first aqueous solution comprises one or more acids selected from the group consisting of inorganic acids, organic acids, and combinations thereof.

In some embodiments, the acid is a mixture of one or more inorganic acids and one or more organic acids, wherein a weight ratio of the one or more inorganic acids to the one or more organic acids is from about 10/1 to about 1/10, from about 8/1 to about 1/8, from about 6/1 to about 1/6, or from about 4/1 to about 1/4.

In certain embodiments, the one or more inorganic acids are selected from the group consisting of hydrochloric acid, nitric acid, phosphoric acid, sulfuric acid, boric acid, hydrofluoric acid, hydrobromic acid, perchloric acid, hydroiodic acid, and combinations thereof. In further embodiments, the one or more inorganic acids are sulfuric acid, hydrochloric acid, hydrobromic acid, nitric acid, phosphoric acid, and combinations thereof. In still further embodiments, the inorganic acid is hydrochloric acid. In some embodiments, the acid is free of inorganic acid such as hydrochloric acid, nitric acid, phosphoric acid, sulfuric acid, boric acid, hydrofluoric acid, hydrobromic acid, perchloric acid, or hydroiodic acid.

In some embodiments, the one or more organic acids are selected from the group consisting of acetic acid, lactic acid, oxalic acid, citric acid, uric acid, trifluoroacetic acid, methanesulfonic acid, formic acid, propionic acid, butyric acid, valeric acid, gluconic acid, malic acid, caproic acid, and combinations thereof. In further embodiments, the one or more organic acids are formic acid, acetic acid, propionic acid, and combinations thereof. In still further embodiments, the organic acid is acetic acid. In some embodiments, the acid is free of organic acid such as acetic acid, lactic acid, oxalic acid, citric acid, uric acid, trifluoroacetic acid, methanesulfonic acid, formic acid, propionic acid, butyric acid, valeric acid, gluconic acid, malic acid, or caproic acid.

The pH of the first aqueous solution is maintained during the addition of the active battery electrode material at a range from about 4.0 to about 7.5 by addition of one or more acids as a pH adjuster. The choice of the pH adjuster is not critical. Any suitable organic or inorganic acid may be used. In some embodiments, the pH adjuster is an acid selected from the group consisting of an inorganic acid, an organic acid, and combinations thereof. The pH can be monitored by a pH measuring device such as pH sensors. In some embodiments, more than one pH sensors are used for monitoring the pH value.

When the cathode material having a core-shell structure is exposed to an aqueous acidic solution, the shell of the core-shell composite will be damaged by the acidic environment, thereby affecting the performance of the cathode material. In some embodiments, the shell of the core-shell composite is very thin and has a thickness from about 3 µm to about 15 µm. The thin layer is very fragile and can therefore easily be damaged. In certain embodiments, the first aqueous solution is slightly alkaline or neutral, and has a pH anywhere within the range from about 7.0 to about 7.5 or from about 7.0 to about 8.0. In some embodiments, the core-shell composite is pre-treated in water, or a mixture of water and alcohol. In one embodiment, the first aqueous solution is water and contaminants such as dirt and water-soluble impurities can be removed from the surface of the core-shell composite without damaging the shell. In another embodiment, the first aqueous solution is a mixture of water and alcohol, and contaminants such as dirt, organic compounds such as grease and oil, and water-soluble impurities can be removed from the surface of the core-shell composite without damaging the shell. In further embodiments, the alcohol is selected from the group consisting of methanol, ethanol, propanol, butanol, pentanol, and isomers and combinations thereof.

The use of the aqueous acidic solution for pre-treating the Ni-rich cathode material such as NMC532, NMC622, or NMC811 may result in defects on the surface of the cathode material. These defects in turn cause mild to severe degradation of electrochemical performance of an electrochemical cell. Acid pretreatment may also lead to surface irregularities of the cathode material, which in turn cause reduced cell performance or even cell failure. In some embodiments, the Ni-rich cathode material is pre-treated in a slightly alkaline or neutral environment. In certain embodiments, the first aqueous solution has a pH anywhere within the range from about 7.0 to about 7.5 or from about 7.0 to about 8.0. In some embodiments, the Ni-rich cathode material is pre-treated in water, alcohol or a mixture of water and alcohol. In other embodiments, the Ni-rich cathode material is pre-treated in a slightly acidic environment having a pH from about 6.0 to about 7.0. In further embodiments, the first aqueous solution comprises an acid in an amount from about 0.001 wt.% to about 0.01 wt.%. In other embodiments, the first aqueous solution comprises an acid in an amount of less than about 0.01 wt.%. Therefore, contaminants can be removed from the surface of the Ni-rich cathode material without creating surface defects for the cathode material.

In some embodiments, after adding the cathode material to the first aqueous solution, the mixture can be further stirred for a time period sufficient for forming the first suspension. In certain embodiments, the time period is from about 5 minutes to about 2 hours, from about 5 minutes to about 1.5 hours, from about 5 minutes to about 1 hour, from about 5 minutes to about 30 minutes, from about 5 minutes to about 15 minutes, from about 10 minutes to about 2 hours, from about 10 minutes to about 1.5 hours, from about 10 minutes to about 1 hour, from about 10 minutes to about 30 minutes, from about 15 minutes to about 1 hour, or from about 30 minutes to about 1 hour.

In some embodiments, the first suspension can be dried to obtain a pre-treated cathode material. Any dryer that can dry a suspension can be used herein. In some embodiments, the drying process is performed by a double-cone vacuum dryer, a microwave dryer, or a microwave vacuum dryer.

Conventionally, metal material is not suggested to use microwave dryer to dry as the characteristic of metal material can reflect microwave frequency. To our surprise, when drying is performed by a microwave dryer or microwave vacuum dryer, the cathode material can be effectively dried and drying time can be significantly shortened, thereby lowering operational costs. In some embodiments, the drying time is from about 3 minutes to about 25 minutes. Furthermore, drying the cathode material at high temperatures for long time may result in undesirable decomposition of the cathode material, and alter oxidation states of the cathode material. The cathode material having high nickel and/or manganese content is particularly temperature sensitive. As such, the positive electrode may have reduced performance. Therefore, decreased drying times significantly reduce or eliminate degradation of the cathode material. In certain embodiments, the dryer is a microwave dryer or a microwave vacuum dryer. In some embodiments, the microwave dryer or microwave vacuum dryer is operated at a power from about 500 W to about 3 kW, from about 5 kW to about 15 kW, from about 6 kW to about 20 kW, from about 7 kW to about 20 kW, from about 15 kW to about 70 kW, from about 20 kW to about 90 kW, from about 30 kW to about 100 kW, or from about 50 kW to about 100 kW.

In some embodiments, the drying step can be carried out for a time period that is sufficient for drying the first suspension. In certain embodiments, the drying time is from about 3 minutes to about 2 hours, from about 5 minutes to about 2 hours, from about 10 minutes to about 3 hours, from about 10 minutes to about 4 hours, from about 15 minutes to about 4 hours, or from about 20 minutes to about 5 hours.

After formation of the pre-treated cathode material by drying the first suspension, a slurry can be formed by dispersing the pre-treated cathode material, a conductive agent, and a binder material in a second aqueous solution.

In certain embodiments, the amount of the pre-treated cathode material is at least 1%, at least 2%, at least 3%, at least 4%, at least 5%, at least 10%, at least 15%, at least 20%, at least 25%, at least 30%, at least 35%, at least 40%, at least 45%, at least 50%, at least 55%, at least 60%, at least 65%, at least 70%, at least 75%, at least 80%, at least 85%, at least 90%, or at least 95% by weight or volume, based on the total weight or volume of the slurry. In some embodiments, the amount of the pre-treated cathode material is at most 1%, at most 2%, at most 3%, at most 4%, at most 5%, at most 10%, at most 15%, at most 20%, at most 25%, at most 30%, at most 35%, at most 40%, at most 45%, at most 50%, at most 55%, at most 60%, at most 65%, at most 70%, at most 75%, at most 80%, at most 85%, at most 90%, or at most 95% by weight or volume, based on the total weight or volume of the slurry.

In some embodiments, the pre-treated cathode material is the major component of the slurry. In some embodiments, the pre-treated cathode material is present in an amount from about 50% to about 95% by weight or volume, from about 55% to about 95% by weight or volume, from about 60% to about 95% by weight or volume, from about 65% to about 95% by weight or volume, from about 70% to about 95% by weight or volume, from about 75% to about 95% by weight or volume, from about 80% to about 95% by weight or volume, from about 85% to about 95% by weight or volume, from about 55% to about 85% by weight or volume, from about 60% to about 85% by weight or volume, from about 65% to about 85% by weight or volume, from about 70% to about 85% by weight or volume, from about 65% to about 80% by weight or volume, or from about 70% to about 80% by weight or volume, based on the total weight or volume of the slurry.

The conductive agent in the slurry is for enhancing the electrically-conducting property of an electrode. According to the invention, the conductive agent is selected from the group consisting of carbon, carbon black, graphite, expanded graphite, graphene, graphene nanoplatelets, carbon fibres, carbon nano-fibers, graphitized carbon flake, carbon tubes, carbon nanotubes, activated carbon, mesoporous carbon, and combinations thereof.

The binder material in the slurry performs a role of binding the active battery electrode material and conductive agent together on the current collector. According to the invention, the binder material is selected from the group consisting of styrene-butadiene rubber (SBR), carboxymethyl cellulose (CMC), polyvinylidene fluoride (PVDF), acrylonitrile copolymer, polyacrylic acid (PAA), polyacrylonitrile, poly(vinylidene fluoride)-hexafluoropropene (PVDF-HFP), latex, a salt of alginic acid, and combinations thereof. In certain embodiments, the salt of alginic acid comprises a cation selected from Na, Li, K, Ca, NH₄, Mg, Al, or a combination thereof.

In some embodiments, the binder material is SBR, CMC, PAA, a salt of alginic acid, or a combination thereof. In certain embodiments, the binder material is acrylonitrile copolymer. In some embodiments, the binder material is polyacrylonitrile.

In certain embodiments, the amount of each of the conductive agent and binder material is independently at least 1%, at least 2%, at least 3%, at least 4%, at least 5%, at least 10%, at least 15%, at least 20%, at least 25%, at least 30%, at least 35%, at least 40%, at least 45%, or at least 50% by weight or volume, based on based on the total weight or volume of the slurry. In some embodiments, the amount of each of the conductive agent and binder material is independently at most 1%, at most 2%, at most 3%, at most 4%, at most 5%, at most 10%, at most 15%, at most 20%, at most 25%, at most 30%, at most 35%, at most 40%, at most 45%, or at most 50% by weight or volume, based on the total weight or volume of the slurry.

In some embodiments, the conductive agent is pre-treated in an alkaline or basic solution prior to step 3). Pre-treating the conductive agent before the slurry preparation can enhance wettability and dispersing capability of the conductive agent in the slurry, thus allowing homogeneous distribution of the conductive agent within the dried composite electrode. If particulates of the conductive agent are dispersed heterogeneously in the electrode, the battery performance, life, and safety will be affected.

In certain embodiments, the conductive agent can be pre-treated for a time period from about 30 minutes to about 2 hours, from about 30 minutes to about 1.5 hours, from about 30 minutes to about 1 hour, from about 45 minutes to about 2 hours, from about 45 minutes to about 1.5 hours, or from about 45 minutes to about 1 hour. In some embodiments, the alkaline or basic solution comprises a base selected from the group consisting of H₂O₂, LiOH, NaOH, KOH, NH₃•H₂O, Be(OH)₂, Mg(OH)₂, Ca(OH)₂, Li₂CO₃, Na₂CO₃, NaHCO₃, K₂CO₃, KHCO₃, and combinations thereof. In certain embodiments, the basic solution comprises an organic base. In some embodiments, the basic solution is free of organic base. In certain embodiments, the basic solution is free of H₂O₂, LiOH, NaOH, KOH, NH₃•H₂O, Be(OH)₂, Mg(OH)₂, Ca(OH)₂, Li₂CO₃, Na₂CO₃, NaHCO₃, K₂CO₃ or KHCO₃. It is desired to keep the particulate dispersed uniformly within a slurry. Pretreating the conductive agent with an alkaline solution can wash away impurity such as oil and grease, promote more uniform distribution of particles of the conductive agent and improve its dispensability in the slurry without accumulating the alkaline impurity which has negative impact on battery performance. Compared to adding dispersing agent, the dispersing agent will stay in the slurry and may negatively impact battery performance.

In some embodiments, the pH of the alkaline or basic solution is greater than 7, greater than 8, greater than 9, greater than 10, greater than 11, greater than 12, or greater than 13. In some embodiments, the pH of the alkaline or basic solution is less than 8, less than 9, less than 10, less than 11, less than 12, or less than 13.

In certain embodiments, the conductive agent is dispersed in a third aqueous solution to form a second suspension prior to step 3).

Compared to an active battery electrode material, a conductive agent has a relatively high specific surface area. Therefore, the conductive agent has a tendency to agglomerate due to its relatively high specific surface area, especially when the particulates of the conductive agent must be dispersed in a highly dense suspension of the active battery electrode material. Dispersing the conductive agent before the slurry preparation can minimize the particles from agglomerating, thus allowing more homogeneous distribution of the conductive agent within the dried composite electrode. This could reduce internal resistance and enhance electrochemical performance of electrode materials.

Each of the pre-treated cathode material, conductive agent, and binder material can be independently added to the second aqueous solution in one portion, thereby greatly simplifying the method of the present invention.

In some embodiments, the amount of the conductive agent in the second suspension is from about 0.05 wt.% to about 0.5 wt.%, from about 0.1 wt.% to about 1 wt.%, from about 0.25 wt.% to about 2.5 wt.%, from about 0.5 wt.% to about 5 wt.%, from about 2 wt.% to about 5 wt.%, from about 3 wt.% to about 7 wt.%, or from about 5 wt.% to about 10 wt.%, based on the total weight of the mixture of the conductive agent and the third aqueous solution.

In certain embodiments, the binder material is dissolved in a fourth aqueous solution to form a resulting solution or a binder solution prior to step 3).

Dispersing the solid binder material before the slurry preparation can prevent adhesion of the solid binder material to the surface of other materials, thus allowing the binder material to disperse homogeneously into the slurry. If the binder material is dispersed heterogeneously in the electrode, the performance of the battery may deteriorate.

In some embodiments, the amount of the binder material in the binder solution is from about 3 wt.% to about 6 wt.%, from about 5 wt.% to about 10 wt.%, from about 7.5 wt.% to about 15 wt.%, from about 10 wt.% to about 20 wt.%, from about 15 wt.% to about 25 wt.%, from about 20 wt.% to about 40 wt.%, or from about 35 wt.% to about 50 wt.%, based on the total weight of the mixture of the binder material and the fourth aqueous solution.

In certain embodiments, each of the second, third and fourth aqueous solutions independently is a solution containing water as the major component and a volatile solvent, such as alcohols, lower aliphatic ketones, lower alkyl acetates or the like, as the minor component in addition to water. In certain embodiments, the amount of water in each solution is independently at least 55%, at least 60%, at least 65%, at least 70%, at least 75%, at least 80%, at least 85%, at least 90%, or at least 95% to the total amount of water and solvents other than water. In some embodiments, the amount of water is at most 55%, at most 60%, at most 65%, at most 70%, at most 75%, at most 80%, at most 85%, at most 90%, or at most 95% to the total amount of water and solvents other than water. In some embodiments, each of the second, third and fourth aqueous solutions independently consists solely of water, that is, the proportion of water in each solution is 100 vol.%.

Any water-miscible solvents can be used as the minor component of the second, third or fourth aqueous solution. Some non-limiting examples of the minor component include alcohols, lower aliphatic ketones, lower alkyl acetates and combinations thereof. Some non-limiting examples of the alcohol include C₂-C₄ alcohols, such as methanol, ethanol, isopropanol, n-propanol, butanol, and combinations thereof. Some non-limiting examples of the lower aliphatic ketones include acetone, dimethyl ketone, and methyl ethyl ketone. Some non-limiting examples of the lower alkyl acetates include ethyl acetate, isopropyl acetate, and propyl acetate.

In some embodiments, the volatile solvent or minor component is methyl ethyl ketone, ethanol, ethyl acetate or a combination thereof.

In some embodiments, the composition of the slurry does not require organic solvents. In certain embodiments, each of the second, third and fourth aqueous solutions independently is water. Some non-limiting examples of water include tap water, bottled water, purified water, pure water, distilled water, de-ionized water, D₂O, or a combination thereof. In some embodiments, each of the second, third and fourth aqueous solutions independently is purified water, pure water, de-ionized water, distilled water, or a combination thereof. In certain embodiments, each of the second, third and fourth aqueous solutions is free of an organic solvent such as alcohols, lower aliphatic ketones, lower alkyl acetates. Since the composition of the slurry does not contain any organic solvent, expensive, restrictive and complicated handling of organic solvents is avoided during the manufacture of the slurry.

Any temperature that can be used in the dispersing step to form the slurry can be used herein. In some embodiments, the pre-treated cathode material, conductive agent and binder material are added to the stirring second aqueous solution at about 14 °C, about 16 °C, about 18 °C, about 20 °C, about 22 °C, about 24 °C, or about 26 °C. In certain embodiments, the dispersing process can be performed with heating at a temperature from about 30 °C to about 80 °C, from about 35 °C to about 80 °C, from about 40 °C to about 80 °C, from about 45 °C to about 80 °C, from about 50 °C to about 80 °C, from about 55 °C to about 80 °C, from about 55 °C to about 70 °C, from about 45 °C to about 85 °C, or from about 45 °C to about 90 °C. In some embodiments, the dispersing process can be performed at a temperature below 30 °C, below 25 °C, below 22 °C, below 20 °C, below 15 °C, or below 10 °C.

Optional components may be used to assist in dispersing the pre-treated cathode material, conductive agent and binder material in the slurry. In some embodiments, the optional component is a dispersing agent. Any dispersing agent that can enhance the dispersion may be added to the slurry disclosed herein. In certain embodiments, the dispersing agent is selected from the group consisting of ethanol, isopropanol, n-propanol, t-butanol, n-butanol, lithium dodecyl sulfate, trimethylhexadecyl ammonium chloride, polyethylene ethoxylate, sodium dodecylbenzene sulfonate, sodium stearate, and combinations thereof.

In some embodiments, the total amount of the dispersing agent is from about 0.1% to about 10%, from about 0.1% to about 8%, from about 0.1% to about 6%, from about 0.1% to about 5%, from about 0.1% to about 4%, from about 0.1% to about 3%, from about 0.1% to about 2%, or from about 0.1% to about 1% by weight, based on the total weight of the slurry.

In some embodiments, each of the second, third and fourth aqueous solutions independently comprises a dispersing agent for promoting the separation of particles and/or preventing agglomeration of the particles. Any surfactant that can lower the surface tension between a liquid and a solid can be used as the dispersing agent.

In certain embodiments, the dispersing agent is a nonionic surfactant, an anionic surfactant, a cationic surfactant, an amphoteric surfactant, or a combination thereof.

Some non-limiting examples of suitable nonionic surfactant include an alkoxylated alcohol, a carboxylic ester, a polyethylene glycol ester, and combinations thereof. Some non-limiting examples of suitable alkoxylated alcohol include ethoxylated and propoxylated alcohols. In some embodiments, the slurry disclosed herein is free of nonionic surfactant.

Some non-limiting examples of suitable anionic surfactant include a salt of an alkyl sulfate, an alkyl polyethoxylate ether sulfate, an alkyl benzene sulfonate, an alkyl ether sulfate, a sulfonate, a sulfosuccinate, a sarcosinate, and combinations thereof. In some embodiments, the anionic surfactant comprises a cation selected from the group consisting of sodium, potassium, ammonium, and combinations thereof. In some embodiments, the slurry disclosed herein is free of anionic surfactant.

Some non-limiting examples of suitable cationic surfactant include an ammonium salt, a phosphonium salt, an imidazolium salt, a sulfonium salt, and combinations thereof. Some non-limiting examples of suitable ammonium salt include stearyl trimethylammonium bromide (STAB), cetyl trimethylammonium bromide (CTAB), and myristyl trimethylammonium bromide (MTAB), and combinations thereof. In some embodiments, the slurry disclosed herein is free of cationic surfactant.

Some non-limiting examples of suitable amphoteric surfactant are surfactants that contain both cationic and anionic groups. The cationic group is ammonium, phosphonium, imidazolium, sulfonium, or a combination thereof. The anionic hydrophilic group is carboxylate, sulfonate, sulfate, phosphonate, or a combination thereof. In some embodiments, the slurry disclosed herein is free of amphoteric surfactant.

The slurry can be homogenized by a homogenizer. Any equipment that can homogenize the slurry can be used. In some embodiments, the homogenizer is a stirring mixer, a blender, a mill, an ultrasonicator, a rotor-stator homogenizer, an atomizer, or a high pressure homogenizer.

In some embodiments, the homogenizer is an ultrasonicator. Any ultrasonicator that can apply ultrasound energy to agitate and disperse particles in a sample can be used herein. In some embodiments, the ultrasonicator is a probe-type ultrasonicator or an ultrasonic flow cell.

In certain embodiments, the slurry is homogenized by mechanical stirring for a time period from about 2 hours to about 8 hours. In some embodiments, the stirring mixer is a planetary mixer consisting of planetary and high speed dispersion blades. In certain embodiments, the rotational speed of the planetary blade is from about 20 rpm to about 200 rpm and rotational speed of the dispersion blade is from about 1,000 rpm to about 3,500 rpm. In further embodiments, the rotational speed of the planetary blade is from about 20 rpm to about 150 rpm or from about 30 rpm to about 100 rpm, and rotational speed of the dispersion blade is from about 1,000 rpm to about 3,000 rpm or from about 1,500 rpm to about 2,500 rpm. When the homogenizer is a stirring mixer, the slurry is stirred for at least two hours to ensure sufficient dispersion. If the dispersion is not sufficient, the battery performance such as cycle life may be seriously affected. In further embodiments, the stirring time is from about 2 hours to about 6 hours, from about 3 hours to about 8 hours, from about 3 hours to about 6 hours, or from about 4 hours to about 8 hours.

In certain embodiments, the ultrasonic flow cell can be operated in a one-pass, multiple-pass or recirculating mode. In some embodiments, the ultrasonic flow cell can include a water-cooling jacket to help maintain the required temperature. Alternatively, a separate heat exchanger may be used. In certain embodiments, the flow cell can be made from stainless steel or glass.

In some embodiments, the slurry is homogenized for a time period from about 1 hour to about 10 hours, from about 2 hours to about 4 hours, from about 15 minutes to about 4 hours, from about 30 minutes to about 4 hours, from about 1 hour to about 4 hours, from about 2 hours to about 5 hours, from about 3 hours to about 5 hours, or from about 2 hours to about 6 hours.

In certain embodiments, the ultrasonicator is operated at a power density from about 10 W/L to about 100 W/L, from about 20 W/L to about 100 W/L, from about 30 W/L to about 100 W/L, from about 40 W/L to about 80 W/L, from about 40 W/L to about 70 W/L, from about 40 W/L to about 50 W/L, from about 40 W/L to about 60 W/L, from about 50 W/L to about 60 W/L, from about 20 W/L to about 80 W/L, from about 20 W/L to about 60 W/L, or from about 20 W/L to about 40 W/L.

The continuous flow through system has several advantages over the batch-type processing. By sonication via ultrasonic flow cell, the processing capacity becomes significantly higher. The retention time of the material in the flow cell can be adjusted by adjusting the flow rate.

By sonication via recirculating mode, the material is recirculated many times through the flow cell in a recirculating configuration. Recirculation increases the cumulative exposure time because liquid passes through the ultrasonic flow cell only once in a single-pass configuration.

The multiple-pass mode has a multiple flow cell configuration. This arrangement allows for a single-pass processing without the need for recirculation or multiple passes through the system. This arrangement provides an additional productivity scale-up factor equal to the number of utilized flow cells.

The homogenizing step disclosed herein reduces or eliminates the potential aggregation of the cathode material and the conductive agent and enhances dispersion of each ingredient in the slurry.

When the slurry is homogenized by a mill, a media such as balls, pebbles, small rock, sand or other media is used in a stirred mixture along with the sample material to be mixed. The particles in the mixture are mixed and reduced in size by impact with rapidly moving surfaces in a mill. In some embodiments, the ball is made of hard materials such as steel, stainless steel, ceramic or zirconium dioxide (ZrO₂). However, it is observed that the mechanical stress during the milling process causes damages to the structure of the cathode material resulting in distortion or major structural damage such as cracks. The cathode material may also be abraded by the ball causing structural damage and irregularly-shaped surface. These defects in turn cause mild to severe degradation of electrochemical performance of an electrochemical cell. The cathode material having a core-shell structure is even more susceptible to mechanical damages due to vulnerability of the shell.

The homogenized slurry can be applied on a current collector to form a coated film on the current collector. The current collector acts to collect electrons generated by electrochemical reactions of the active battery electrode material or to supply electrons required for the electrochemical reactions. In some embodiments, each of the current collectors of the positive and negative electrodes, which can be in the form of a foil, sheet or film, is independently stainless steel, titanium, nickel, aluminum, copper or electrically-conductive resin. In certain embodiments, the current collector of the positive electrode is an aluminum thin film. In some embodiments, the current collector of the negative electrode is a copper thin film.

In some embodiments, the current collector has a thickness from about 6 µm to about 100 µm since thickness will affect the volume occupied by the current collector within a battery and the amount of the active battery electrode material and hence the capacity in the battery.

In certain embodiments, the coating process is performed using a doctor blade coater, a slot-die coater, a transfer coater, a spray coater, a roll coater, a gravure coater, a dip coater, or a curtain coater. In some embodiments, the thickness of the coated film on the current collector is from about 10 µm to about 300 µm, or from about 20 µm to about 100 µm.

After applying the homogenized slurry on a current collector, the coated film on the current collector can be dried by a dryer to obtain the battery electrode. Any dryer that can dry the coated film on the current collector can be used herein. Some non-limiting examples of the dryer are a batch drying oven, a conveyor drying oven, and a microwave drying oven. Some non-limiting examples of the conveyor drying oven include a conveyor hot air drying oven, a conveyor resistance drying oven, a conveyor inductive drying oven, and a conveyor microwave drying oven.

In some embodiments, the conveyor drying oven for drying the coated film on the current collector includes one or more heating sections, wherein each of the heating sections is individually temperature controlled, and wherein each of the heating sections may include independently controlled heating zones.

In certain embodiments, the conveyor drying oven comprises a first heating section positioned on one side of the conveyor and a second heating section positioned on an opposing side of the conveyor from the first heating section, wherein each of the first and second heating sections independently comprises one or more heating elements and a temperature control system connected to the heating elements of the first heating section and the second heating section in a manner to monitor and selectively control the temperature of each heating section.

In some embodiments, the conveyor drying oven comprises a plurality of heating sections, wherein each heating section includes independent heating elements that are operated to maintain a constant temperature within the heating section.

In certain embodiments, each of the first and second heating sections independently has an inlet heating zone and an outlet heating zone, wherein each of the inlet and outlet heating zones independently comprises one or more heating elements and a temperature control system connected to the heating elements of the inlet heating zone and the outlet heating zone in a manner to monitor and selectively control the temperature of each heating zone separately from the temperature control of the other heating zones.

The temperature range means a controllable temperature gradient in which the temperature gradually rises from the inlet temperature to the outlet temperature. The controllable temperature gradient avoids the coated film on the current collector from drying too rapidly. Drying the coated film too quickly can degrade materials in the slurry. Drying the coated film too quickly can also cause stress defects in the electrode because the solvent can be removed from the coated film more quickly than the film can relax or adjust to the resulting volume changes, which can cause defects such as cracks. It is believed that avoiding such defects can generally enhance performance of the electrode. Furthermore, drying the coated film too quickly can cause the binder material to migrate and form a layer of the binder material on the surface of the electrode.

In certain embodiments, the coated film on the current collector is dried at a relatively slow rate. In certain embodiments, the coated film on the current collector is dried relatively slowly at a constant rate, followed by a relatively quick drying rate.

According to the invention, the coated film on the current collector is dried at a temperature from about 45 °C to about 100 °C for a time period from about 1 minute to about 30 minutes. The lower drying temperatures may avoid the undesirable decomposition of cathode material having high nickel and/or manganese content.

In certain embodiments, the conveyor moves at a speed from about 2 meter/minute to about 30 meter/minute, from about 2 meter/minute to about 25 meter/minute, from about 2 meter/minute to about 20 meter/minute, from about 2 meter/minute to about 16 meter/minute, from about 3 meter/minute to about 30 meter/minute, from about 3 meter/minute to about 20 meter/minute, or from about 3 meter/minute to about 16 meter/minute.

Controlling the conveyor length and speed can regulate the drying time of the coated film. Therefore, the drying time can be increased without increasing the length of the conveyor.

After the coated film on the current collector is dried, the battery cathode is formed. In some embodiments, the battery cathode is compressed mechanically in order to enhance the density of the cathode.

The method disclosed herein has the advantage that an aqueous solvent is used in the manufacturing process, which can save process time and facilities by avoiding the need to handle or recycle hazardous organic solvents. In addition, costs are reduced by simplifying the total process. Therefore, this method is especially suited for industrial processes because of its low cost and ease of handling.

In some embodiments, batteries comprising the cathode prepared by the method disclosed herein show a capacity retention of at least about 89%, about 94%, about 95%, about 97%, or about 98% after 500 cycles when discharged at a rate of 1 C. In certain embodiments, batteries show a capacity retention of at least about 83%, about 88%, about 90%, about 92%, about 94% about 95% or about 96% after 1,000 cycles when discharged at a rate of 1 C. In some embodiments, batteries show a capacity retention of at least about 73%, about 77%, about 80%, about 81%, about 88%, about 90%, or about 92% after 2,000 cycles when discharged at a rate of 1 C.

The following examples are presented to exemplify embodiments of the invention but are not intended to limit the invention to the specific embodiments set forth. Unless indicated to the contrary, all parts and percentages are by weight. All numerical values are approximate. When numerical ranges are given, it should be understood that embodiments outside the stated ranges may still fall within the scope of the invention. Specific details described in each example should not be construed as necessary features of the invention.

### EXAMPLES

### Example 1

### A) Pre-treatment of cathode material

A particulate cathode material LiNi_{0.33}Mn_{0.33}Co_{0.33}O₂ (NMC333) (obtained from Xiamen Tungsten CO. Ltd., China) was added to a stirring solution containing 50% deionized water and 50% ethanol at room temperature to form a suspension having a solid content of about 35% by weight. The pH of the suspension was measured using a pH meter and the pH was about 7. The suspension was further stirred at room temperature for 5 hours. Then the suspension was separated and dried by a 2.45GHz microwave dryer (ZY-4HO, obtained from Zhiya Industrial Microwave Equipment Co., Ltd., Guangdong, China) at 750 W for 5 minutes to obtain a pre-treated cathode material.

### B) Preparation of positive electrode slurry

A positive electrode slurry was prepared by mixing 91 wt.% pre-treated cathode material, 4 wt.% carbon black (SuperP; Timcal Ltd, Bodio, Switzerland), 4 wt.% polyacrylonitrile (PAN) (LA 132, Chengdu Indigo Power Sources Co., Ltd., China) and 1% isopropanol (obtained from Aladdin Industries Corporation, China) in deionized water to form a slurry having a solid content of 70 wt.%. The slurry was homogenized by a planetary stirring mixer (200 L mixer, Chienemei Industry Co. Ltd., China) for 6 hours operated at a stirring speed of 20 rpm and a dispersing speed of 1500 rpm to obtain a homogenized slurry. The formulation of Example 1 is shown in Table 1 below.

### C) Preparation of positive electrode

The homogenized slurry was coated onto both sides of an aluminum foil having a thickness of 20 µm using a transfer coater (ZY-TSF6-6518, obtained from Jin Fan Zhanyu New Energy Technology Co. Ltd., China) with an area density of about 26 mg/cm². The coated films on the aluminum foil were dried for 3 minutes by a 24-meter-long conveyor hot air drying oven as a sub-module of the transfer coater operated at a conveyor speed of about 8 meter/minute to obtain a positive electrode. The temperature-programmed oven allowed a controllable temperature gradient in which the temperature gradually rose from the inlet temperature of 55 °C to the outlet temperature of 80 °C.

### D) Preparation of negative electrode

A negative electrode slurry was prepared by mixing 90 wt.% hard carbon (HC; 99.5% purity, Ruifute Technology Ltd., Shenzhen, Guangdong, China), 5 wt.% carbon black and 5 wt.% polyacrylonitrile in deionized water to form a slurry having a solid content of 50 wt.%. The slurry was coated onto both sides of a copper foil having a thickness of 9 µm using a transfer coater with an area density of about 15 mg/cm². The coated films on the copper foil were dried at about 50 °C for 2.4 minute by a 24-meter-long conveyor hot air dryer operated at a conveyor speed of about 10 meter/minute to obtain a negative electrode.

### Morphological measurement of Example 1

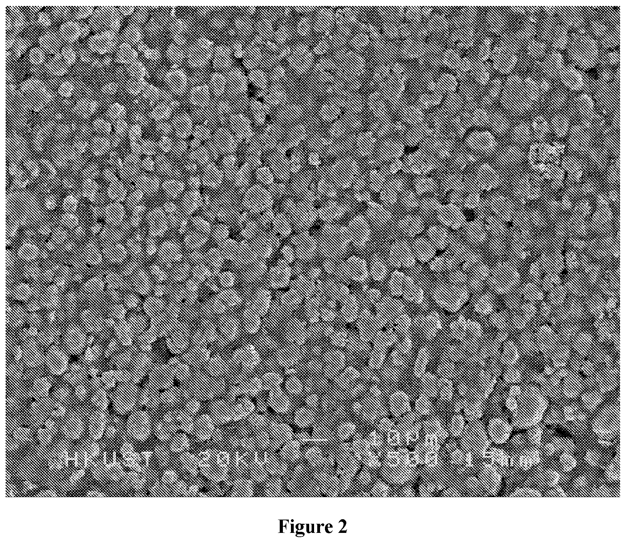

Figure 2 shows the SEM image of the surface morphology of the coated cathode electrode after drying. The morphology of the coated cathode electrode was characterized by a scanning electron microscope (JEOL-6300, obtained from JEOL, Ltd., Japan). The SEM image clearly shows a uniform, crack-free and stable coating throughout the electrode surface. Furthermore, the electrode shows a homogeneous distribution of the pre-treated cathode material and conductive agent without large agglomerates.

### Example 2

### Assembling of pouch-type battery

After drying, the resulting cathode film and anode film of Example 1 were used to prepare the cathode and anode respectively by cutting into individual electrode plates. A pouch cell was assembled by stacking the cathode and anode electrode plates alternatively and then packaged in a case made of an aluminum-plastic laminated film. The cathode and anode electrode plates were kept apart by separators and the case was pre-formed. An electrolyte was then filled into the case holding the packed electrodes in high-purity argon atmosphere with moisture and oxygen content < 1 ppm. The electrolyte was a solution of LiPF₆ (1 M) in a mixture of ethylene carbonate (EC), ethyl methyl carbonate (EMC) and dimethyl carbonate (DMC) in a volume ratio of 1:1:1. After electrolyte filling, the pouch cells were vacuum sealed and then mechanically pressed using a punch tooling with standard square shape.

### Electrochemical measurements of Example 2

### I) Nominal capacity

The cell was tested galvanostatically at a current density of C/2 at 25 °C on a battery tester (BTS-5V20A, obtained from Neware Electronics Co. Ltd, China) between 3.0 V and 4.3 V. The nominal capacity was about 10 Ah.

### II) Cyclability performance

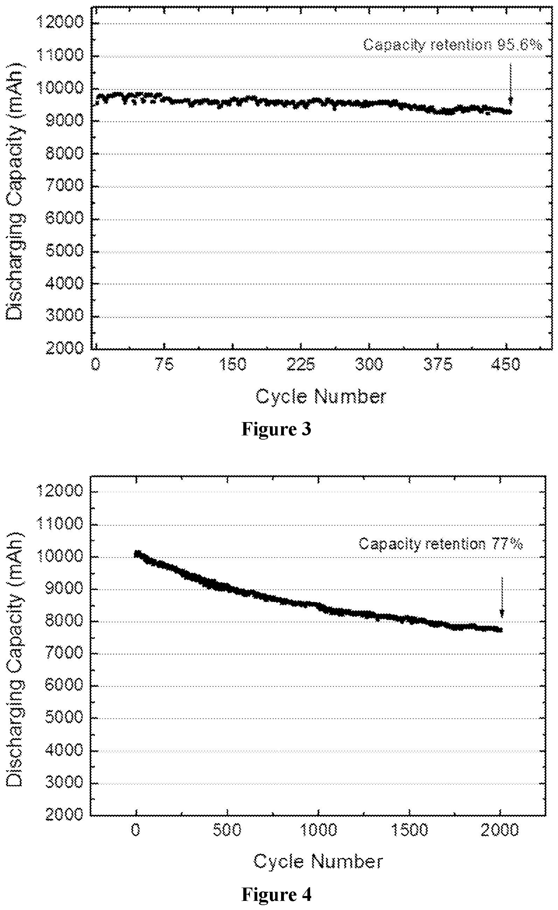

The cyclability performance of the pouch cell was tested by charging and discharging at a constant current rate of 1C between 3.0 V and 4.3 V. Test result of cyclability performance is shown in Figure 3. The capacity retention after 450 cycles was about 95.6% of the initial value. The test result is shown in Table 2 below.

### Example 3

### A) Pre-treatment of cathode material

A particulate cathode material LiMn₂O₄ (LMO) (obtained from HuaGuan HengYuan LiTech Co. Ltd., Qingdao, China) was added to a stirring 7 wt.% solution of acetic acid in water (obtained from Aladdin Industries Corporation, China) at room temperature to form a suspension having a solid content of about 50% by weight. The pH of the suspension was measured using a pH meter and the pH was about 6. The suspension was further stirred at room temperature for 2.5 hours. Then the suspension was separated and dried by a 2.45GHz microwave dryer at 750 W for 5 minutes to obtain a pre-treated cathode material.

### B) Preparation of positive electrode slurry

Carbon nanotube (NTP2003; Shenzhen Nanotech Port Co., Ltd., China) (25g) was pretreated in 2 L of an alkaline solution containing 0.5 wt.% NaOH for about 15 minutes and then washed by deionized water (5 L). The treated carbon nanotube was then dispersed in deionized water to form a suspension having a solid content of 6.25 wt.%.

A positive electrode slurry was prepared by mixing 92 wt.% pre-treated cathode material, 3 wt.% carbon black, 1 wt.% suspension of the treated carbon nanotube and 4 wt.% polyacrylonitrile in deionized water to form a slurry having a solid content of 65 wt.%. The slurry was homogenized by a circulating ultrasonic flow cell (NP8000, obtained from Guangzhou Newpower Ultrasonic Electronic Equipment Co., Ltd., China) for 8 hours operated at 1000 W to obtain a homogenized slurry. The formulation of Example 3 is shown in Table 1 below.

### C) Preparation of positive electrode

The homogenized slurry was coated onto both sides of an aluminum foil having a thickness of 20 µm using a transfer coater with an area density of about 40 mg/cm². The coated films on the aluminum foil were dried for 6 minutes by a 24-meter-long conveyor hot air drying oven as a sub-module of the transfer coater operated at a conveyor speed of about 4 meter/minute to obtain a positive electrode. The temperature-programmed oven allowed a controllable temperature gradient in which the temperature gradually rose from the inlet temperature of 65 °C to the outlet temperature of 90 °C.

### D) Preparation of negative electrode

A negative electrode slurry was prepared by mixing 90 wt.% hard carbon (HC; 99.5% purity, Ruifute Technology Ltd., Shenzhen, Guangdong, China), 5 wt.% carbon black and 5 wt.% polyacrylonitrile in deionized water to form a slurry having a solid content of 50 wt.%. The slurry was coated onto both sides of a copper foil having a thickness of 9 µm using a transfer coater with an area density of about 15 mg/cm². The coated films on the copper foil were dried at about 50 °C for 2.4 minutes by a 24-meter-long conveyor hot air dryer operated at a conveyor speed of about 10 meter/minute to obtain a negative electrode.

### Example 4

### Assembling of pouch-type battery

A pouch cell was prepared in the same manner as in Example 2.

### Electrochemical measurements of Example 4

### I) Nominal capacity

The cell was tested galvanostatically at a current density of C/2 at 25 °C on a battery tester between 3.0 V and 4.3 V. The nominal capacity was about 10 Ah.

### II) Cyclability performance

The cyclability performance of the pouch cell was tested by charging and discharging at a constant current rate of 1C between 3.0 V and 4.3 V. Test result of cyclability performance is shown in Figure 4. The capacity retention after 2000 cycles was about 77% of the initial value. The test result is shown in Table 2 below.

### Example 5

### A) Pre-treatment of cathode material

A particulate cathode material LiNi_{0.33}Mn_{0.33}Co_{0.33}O₂ (NMC333) (obtained from Shenzhen Tianjiao Technology Co. Ltd., China) was added to a stirring deionized water at room temperature to form a suspension having a solid content of about 65% by weight. The pH of the suspension was measured using a pH meter and the pH was about 7. The suspension was further stirred at room temperature for 10 hours. Then the suspension was separated and dried by a 2.45GHz microwave dryer at 750 W for 5 minutes to obtain a pre-treated cathode material.

### B) Preparation of positive electrode slurry

A positive electrode slurry was prepared by mixing 93 wt.% pre-treated cathode material, 3 wt.% carbon black, 0.5 wt.% nonylphenol ethoxylate (TERGITOL^{™} NP-6, DOW Chemical, US) and 3.5 wt.% polyacrylonitrile in deionized water to form a slurry having a solid content of 75 wt.%. The slurry was homogenized by a circulating ultrasonic flow cell for 8 hours operated at 1000 W to obtain a homogenized slurry. The formulation of Example 5 is shown in Table 1 below.

### C) Preparation of positive electrode

The homogenized slurry was coated onto both sides of an aluminum foil having a thickness of 20 µm using a transfer coater with an area density of about 32 mg/cm². The coated films on the aluminum foil were dried for 4 minutes by a 24-meter-long conveyor hot air drying oven as a sub-module of the transfer coater operated at a conveyor speed of about 6 meter/minute to obtain a positive electrode. The temperature-programmed oven allowed a controllable temperature gradient in which the temperature gradually rose from the inlet temperature of 50 °C to the outlet temperature of 75 °C.

### D) Preparation of negative electrode

A negative electrode slurry was prepared by mixing 90 wt.% hard carbon, 5 wt.% carbon black and 5 wt.% polyacrylonitrile in deionized water to form a slurry having a solid content of 50 wt.%. The slurry was coated onto both sides of a copper foil having a thickness of 9 µm using a transfer coater with an area density of about 15 mg/cm². The coated films on the copper foil were dried at about 50 °C for 2.4 minutes by a 24-meter-long conveyor hot air dryer operated at a conveyor speed of about 10 meter/minute to obtain a negative electrode.

### Example 6

### Assembling of pouch-type battery

A pouch cell was prepared in the same manner as in Example 2.

### Electrochemical measurements of Example 6

### I) Nominal capacity

The cell was tested galvanostatically at a current density of C/2 at 25 °C on a battery tester between 3.0 V and 4.3 V. The nominal capacity was about 10 Ah.

### II) Cyclability performance

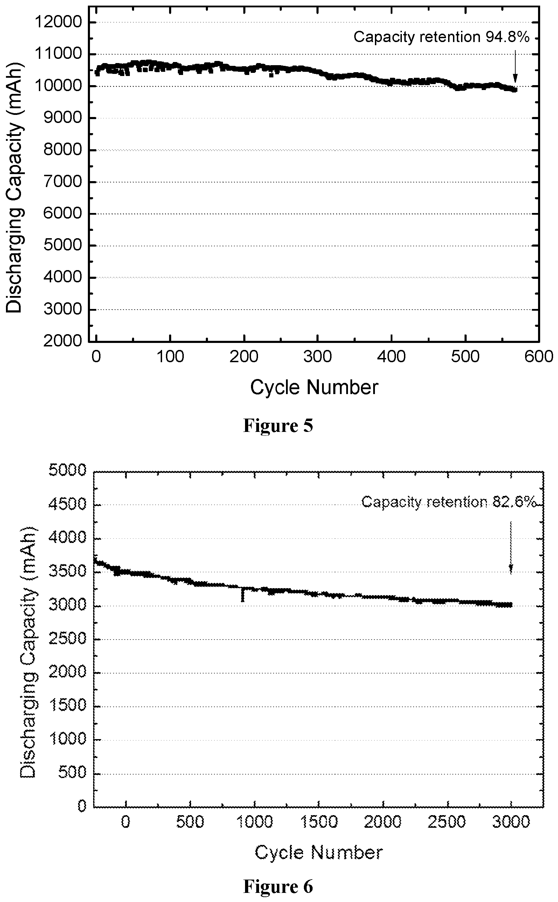

The cyclability performance of the pouch cell was tested by charging and discharging at a constant current rate of 1C between 3.0 V and 4.3 V. Test result of cyclability performance is shown in Figure 5. The capacity retention after 560 cycles was about 94.8% of the initial value. The test result is shown in Table 2 below.

### Example 7

### A) Pre-treatment of cathode material

A particulate cathode material LiFePO₄ (obtained from Xiamen Tungsten Co. Ltd., China) was added to a stirring 3 wt.% solution of acetic acid in water (obtained from Aladdin Industries Corporation, China) at room temperature to form a suspension having a solid content of about 50% by weight. The pH of the suspension was measured using a pH meter and the pH was about 3.8. The suspension was further stirred at room temperature for 2.5 hours. Then the suspension was separated and dried by a 2.45GHz microwave dryer at 700 W for 5 minutes to obtain a pre-treated cathode material.

### B) Preparation of positive electrode slurry

A positive electrode slurry was prepared by mixing 88 wt.% pre-treated cathode material, 5.5 wt.% carbon black, 0.5 wt.% nonylphenol ethoxylate (TERGITOL^{™} NP-6, DOW Chemical, US) and 6 wt.% polyacrylonitrile in deionized water to form a slurry having a solid content of 70 wt.%. The slurry was homogenized by a circulating ultrasonic flow cell for 6 hours operated at 1000 W to obtain a homogenized slurry. The formulation of Example 7 is shown in Table 1 below.

### C) Preparation of positive electrode

The homogenized slurry was coated onto both sides of an aluminum foil having a thickness of 30 µm using a transfer coater with an area density of about 56 mg/cm². The coated films on the aluminum foil were then dried for 6 minutes by a 24-meter-long conveyor hot air drying oven as a sub-module of the transfer coater operated at a conveyor speed of about 4 meter/minute to obtain a positive electrode. The temperature-programmed oven allowed a controllable temperature gradient in which the temperature gradually rose from the inlet temperature of 75 °C to the outlet temperature of 90 °C.

### D) Preparation of negative electrode

A negative electrode slurry was prepared by mixing 90 wt.% hard carbon (HC; 99.5% purity, Ruifute Technology Ltd., Shenzhen, Guangdong, China), 5 wt.% carbon black and 5 wt.% polyacrylonitrile in deionized water to form a slurry having a solid content of 50 wt.%. The slurry was coated onto both sides of a copper foil having a thickness of 9 µm using a transfer coater with an area density of about 15 mg/cm². The coated films on the copper foil were then dried at about 50 °C for 2.4 minutes by a 24-meter-long conveyor hot air dryer operated at a conveyor speed of about 10 meter/minute to obtain a negative electrode.

### Example 8

### Assembling of pouch-type battery

A pouch cell was prepared in the same manner as in Example 2.

### Electrochemical measurements of Example 8

### I) Nominal capacity

The cell was tested galvanostatically at a current density of C/2 at 25 °C on a battery tester between 2.5 V and 3.6 V. The nominal capacity was about 3.6 Ah.

### II) Cyclability performance

The cyclability performance of the pouch cell was tested by charging and discharging at a constant current rate of 1C between 2.5 V and 3.6 V. Test result of cyclability performance is shown in Figure 6. The capacity retention after 3000 cycles was about 82.6% of the initial value. The test result is shown in Table 2 below.

### Example 9

### A) Preparation of an active cathode material with core-shell structure

The core of the core-shell cathode material was Li_{1.03}Ni_{0.51}Mn_{0.32}Co_{0.17}O₂ and was prepared by a co-precipitation method. The shell of the core-shell cathode material was Li_{0.95}Ni_{0.53}Mn_{0.29}Co_{0.15}Al_{0.03}O₂ and was prepared by forming a precipitate of Al(OH)₃ on the surface of the core to form a precursor, mixing the precursor with Li₂CO₃ (obtained from Tianqi Lithium, Shenzhen, China) to obtain a mixture, and calcinating the mixture at 900 °C. The calcinated product was crushed by a jet mill (LNJ-6A, obtained from Mianyang Liuneng Powder Equipment Co., Ltd., Sichuan, China) for about 1 hour, followed by passing the crushed product through a 270-mesh sieve to obtain a cathode material having a particle size D50 of about 38 µm. The content of aluminium in the core-shell cathode material gradiently decreased from the outer surface of the shell to the inner core. The thickness of the shell was about 3 µm.

### B) Pre-treatment of the cathode material

The core-shell cathode material (C-S NMC532) prepared above was added to a stirring solution containing 50% deionized water and 50% methanol at room temperature to form a suspension having a solid content of about 50% by weight. The pH of the suspension was measured using a pH meter and the pH was about 7.5. The suspension was further stirred at room temperature for 3.5 hours. Then the suspension was separated and dried by a 2.45GHz microwave dryer at 750 W for 5 minutes to obtain a pre-treated cathode material.

### C) Preparation of positive electrode slurry

A positive electrode slurry was prepared by mixing 90 wt.% pre-treated cathode material, 5 wt.% carbon black (SuperP; obtained from Timcal Ltd, Bodio, Switzerland) as a conductive agent, and 5 wt.% polyacrylonitrile (LA 132, Chengdu Indigo Power Sources Co., Ltd., China) as a binder, which were dispersed in deionized water to form a slurry with a solid content of 50 wt.%. The slurry was homogenized by a planetary stirring mixer for 6 hours operated at a stirring speed of 20 rpm and a dispersing speed of 1500 rpm to obtain a homogenized slurry. The formulation of Example 9 is shown in Table 1 below.

### D) Preparation of positive electrode

The homogenized slurry was coated onto both sides of an aluminum foil having a thickness of 30 µm using a transfer coater with an area density of about 44 mg/cm². The coated films on the aluminum foil were then dried for 5 minutes by a 24-meter-long conveyor hot air drying oven as a sub-module of the transfer coater operated at a conveyor speed of about 4 meter/minute to obtain a positive electrode. The temperature-programmed oven allowed a controllable temperature gradient in which the temperature gradually rose from the inlet temperature of 67 °C to the outlet temperature of 78 °C.

### E) Preparation of negative electrode

A negative electrode slurry was prepared by mixing 90 wt.% hard carbon (HC; 99.5% purity, Ruifute Technology Ltd., Shenzhen, Guangdong, China), 5 wt.% carbon black and 5 wt.% polyacrylonitrile in deionized water to form a slurry having a solid content of 50 wt.%. The slurry was coated onto both sides of a copper foil having a thickness of 9 µm using a transfer coater with an area density of about 15 mg/cm². The coated films on the copper foil were then dried at about 50 °C for 2.4 minutes by a 24-meter-long conveyor hot air dryer operated at a conveyor speed of about 10 meter/minute to obtain a negative electrode.

### Example 10

### Assembling of pouch-type battery

A pouch cell was prepared in the same manner as in Example 2.

### Electrochemical measurements of Example 10

### I) Nominal capacity

The cell was tested galvanostatically at a current density of C/2 at 25 °C on a battery tester between 3.0 V and 4.2 V. The nominal capacity was about 10.46 Ah.

### II) Cyclability performance

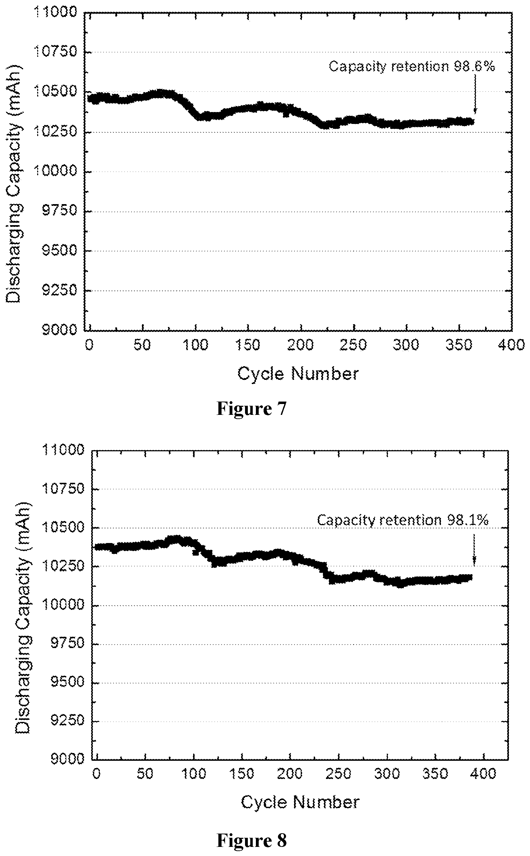

The cyclability performance of the pouch cell was tested by charging and discharging at a constant current rate of 1C between 3.0 V and 4.2 V. Test result of cyclability performance is shown in Figure 7. The capacity retention after 361 cycles was about 98.6% of the initial value. The test result is shown in Table 2 below.

### Example 11 (does not form part of the present invention and serves only as background art)

### A) Preparation of an active cathode material with core-shell structure

The core of the core-shell cathode material was Li_{1.01}Ni_{0.96}Mg_{0.04}O₂ (C-S LNMgO) and was prepared by solid state reaction in which MgO and NiOₓ (x=1 to 2) were mixed with LiOH followed by calcination at 850 °C. The shell of the core-shell cathode material was Li_{0.95}Co_{1.1}O₂ and was prepared by forming a precipitate of Co(OH)₂ on the surface of the core to form a precursor, mixing the precursor with Li₂CO₃ (obtained from Tianqi Lithium, Shenzhen, China) to obtain a mixture, and calcinating the mixture at 800 °C. The calcinated product was crushed by a jet mill (LNJ-6A, obtained from Mianyang Liuneng Powder Equipment Co., Ltd., Sichuan, China) for about 1 hour, followed by passing the crushed product through a 270-mesh sieve to obtain a cathode material having a particle size D50 of about 33 µm. The content of cobalt in the core-shell cathode material gradiently decreased from the outer surface of the shell to the inner core. The thickness of the shell was about 5 µm.

### B) Pre-treatment of the cathode material

The core-shell cathode material prepared above was added to a stirring solution containing 70% deionized water and 30% iso-propanol at room temperature to form a suspension having a solid content of about 60% by weight. The pH of the suspension was measured using a pH meter and the pH was about 8.0. The suspension was further stirred at room temperature for 6.5 hours. Then the suspension was separated and dried by a 2.45GHz microwave dryer at 750 W for 5 minutes to obtain a pre-treated cathode material.

### C) Preparation of positive electrode slurry

A positive electrode slurry was prepared by mixing 89 wt.% pre-treated cathode material, 5.5 wt.% carbon black (SuperP; obtained from Timcal Ltd, Bodio, Switzerland) as a conductive agent, and 5.5 wt.% polyacrylonitrile (LA 132, Chengdu Indigo Power Sources Co., Ltd., China) as a binder, which were dispersed in deionized water to form a slurry with a solid content of 50 wt.%. The slurry was homogenized by a planetary stirring mixer for 6 hours operated at a stirring speed of 20 rpm and a dispersing speed of 1500 rpm to obtain a homogenized slurry. The formulation of Example 11 is shown in Table 1 below.

### D) Preparation of positive electrode

The homogenized slurry was coated onto both sides of an aluminum foil having a thickness of 30 µm using a transfer coater with an area density of about 42 mg/cm². The coated films on the aluminum foil were then dried for 5.5 minutes by a 24-meter-long conveyor hot air drying oven as a sub-module of the transfer coater operated at a conveyor speed of about 4.2 meter/minute to obtain a positive electrode. The temperature-programmed oven allowed a controllable temperature gradient in which the temperature gradually rose from the inlet temperature of 62 °C to the outlet temperature of 75 °C.

### E) Preparation of negative electrode

A negative electrode slurry was prepared by mixing 90 wt.% hard carbon (HC; 99.5% purity, Ruifute Technology Ltd., Shenzhen, Guangdong, China), 5 wt.% carbon black and 5 wt.% polyacrylonitrile in deionized water to form a slurry having a solid content of 50 wt.%. The slurry was coated onto both sides of a copper foil having a thickness of 9 µm using a transfer coater with an area density of about 15 mg/cm². The coated films on the copper foil were then dried at about 50 °C for 2.4 minutes by a 24-meter-long conveyor hot air dryer operated at a conveyor speed of about 10 meter/minute to obtain a negative electrode.

### Example 12

### Assembling of pouch-type battery

A pouch cell was prepared in the same manner as in Example 2.

### Electrochemical measurements of Example 12

### I) Nominal capacity

The cell was tested galvanostatically at a current density of C/2 at 25 °C on a battery tester between 3.0 V and 4.2 V. The nominal capacity was about 10.4 Ah.

### II) Cyclability performance

The cyclability performance of the pouch cell was tested by charging and discharging at a constant current rate of 1C between 3.0 V and 4.2 V. Test result of cyclability performance is shown in Figure 8. The capacity retention after 385 cycles was about 98.1% of the initial value. The test result is shown in Table 2 below.

### Example 13

### A) Pre-treatment of cathode material

A particulate cathode material LiCoO₂ (obtained from Xiamen Tungsten CO. Ltd., China) was added to a stirring solution containing 50% deionized water and 50% ethanol at room temperature to form a suspension having a solid content of about 2% by weight. The pH of the suspension was measured using a pH meter and the pH was about 7.0. The suspension was further stirred at room temperature for 1 hour. Then the suspension was separated and dried by a 2.45GHz microwave dryer (ZY-4HO, obtained from Zhiya Industrial Microwave Equipment Co., Ltd., Guangdong, China) at 750 W for 5 minutes to obtain a pre-treated cathode material.

### B) Preparation of positive electrode slurry

A positive electrode slurry was prepared by mixing 90 wt.% pre-treated cathode material, 5 wt.% carbon black (SuperP; obtained from Timcal Ltd, Bodio, Switzerland) as a conductive agent, and 5 wt.% polyacrylonitrile (LA 132, Chengdu Indigo Power Sources Co., Ltd., China) as a binder, which were dispersed in deionized water to form a slurry with a solid content of 50 wt.%. The slurry was homogenized by a planetary stirring mixer for 6 hours operated at a rotation speed of 30 rpm and a dispersing speed of 1500 rpm to obtain a homogenized slurry. The formulation of Example 13 is shown in Table 1 below.

### C) Preparation of positive electrode

The homogenized slurry was coated onto both sides of an aluminum foil having a thickness of 20 µm using a transfer coater (ZY-TSF6-6518, obtained from Jin Fan Zhanyu New Energy Technology Co. Ltd., China) with an area density of about 26 mg/cm². The coated films on the aluminum foil were dried for 3.4 minutes by a 24-meter-long conveyor hot air drying oven as a sub-module of the transfer coater operated at a conveyor speed of about 7 meter/minute to obtain a positive electrode. The temperature-programmed oven allowed a controllable temperature gradient in which the temperature gradually rose from the inlet temperature of 70 °C to the outlet temperature of 80 °C.

### D) Preparation of negative electrode

A negative electrode slurry was prepared by mixing 90 wt.% hard carbon (HC; 99.5% purity, Ruifute Technology Ltd., Shenzhen, Guangdong, China), 5 wt.% carbon black and 5 wt.% polyacrylonitrile in deionized water to form a slurry having a solid content of 50 wt.%. The slurry was coated onto both sides of a copper foil having a thickness of 9 µm using a transfer coater with an area density of about 15 mg/cm². The coated films on the copper foil were dried at about 50 °C for 2.4 minute by a 24-meter-long conveyor hot air dryer operated at a conveyor speed of about 10 meter/minute to obtain a negative electrode.

### Example 14

### Assembling of pouch-type battery

A pouch cell was prepared in the same manner as in Example 2.

### Electrochemical measurements of Example 14

The cell was tested galvanostatically at a current density of C/2 at 25 °C on a battery tester between 3.0 V and 4.2 V. The nominal capacity was about 10.7 Ah.

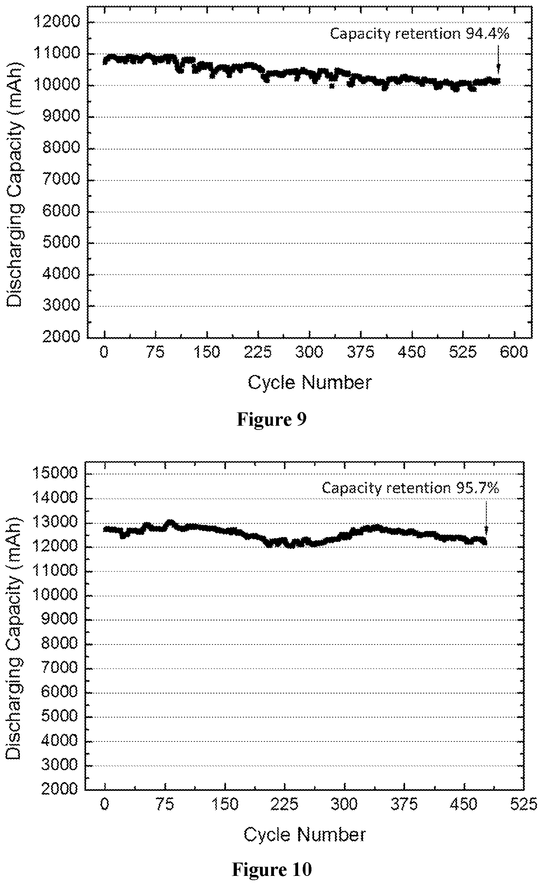

The cyclability performance of the pouch cell was tested by charging and discharging at a constant current rate of 1C between 3.0 V and 4.2 V. Test result of cyclability performance is shown in Table 2 below and Figure 9.

### Example 15

A pouch cell was prepared in the same manner as in Examples 1 and 2, except that cathode material LiNi_{0.8}Mn_{0.1}Co_{0.1}O₂ (NMC811) (obtained from Henan Kelong NewEnergy Co., Ltd., Xinxiang, China) was used instead of NMC333, and additive was not added. A positive electrode slurry was prepared by mixing 91 wt.% pre-treated cathode material, 5 wt.% carbon black (SuperP; Timcal Ltd, Bodio, Switzerland), and 4 wt.% polyacrylonitrile (PAN) (LA 132, Chengdu Indigo Power Sources Co., Ltd., China) in deionized water to form a slurry having a solid content of 55 wt.%. The slurry was homogenized by a planetary stirring mixer (200 L mixer, Chienemei Industry Co. Ltd., China) for 6 hours operated at a stirring speed of 20 rpm and a dispersing speed of 1500 rpm to obtain a homogenized slurry. The formulation of Example 15 is shown in Table 1 below.

The cell was tested galvanostatically at a current density of C/2 at 25 °C on a battery tester between 3.0 V and 4.2 V. The nominal capacity was about 12.7Ah. Test result of cyclability performance is shown in Table 2 below and Figure 10.

### Example 16

A pouch cell was prepared in the same manner as in Examples 1 and 2, except that cathode material LiNi_{0.6}Mn_{0.2}Co_{0.2}O₂ (NMC622) (obtained from Hunan Rui Xiang New Material Co., Ltd., Changsha, China) was used instead of NMC333, and additive was not added. A positive electrode slurry was prepared by mixing 90 wt.% pre-treated cathode material, 5 wt.% carbon black (SuperP; Timcal Ltd, Bodio, Switzerland), and 5 wt.% polyacrylonitrile (PAN) (LA 132, Chengdu Indigo Power Sources Co., Ltd., China) in deionized water to form a slurry having a solid content of 60 wt.%. The slurry was homogenized by a planetary stirring mixer (200 L mixer, Chienemei Industry Co. Ltd., China) for 6 hours operated at a stirring speed of 20 rpm and a dispersing speed of 1500 rpm to obtain a homogenized slurry. The formulation of Example 16 is shown in Table 1 below.

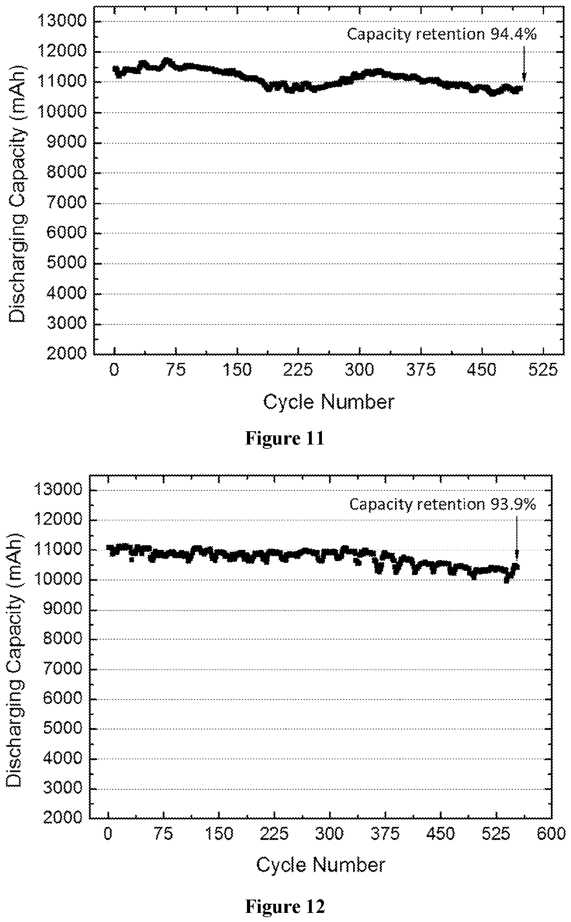

The cell was tested galvanostatically at a current density of C/2 at 25 °C on a battery tester between 3.0 V and 4.2 V. The nominal capacity was about 10 Ah. Test result of cyclability performance is shown in Table 2 below and Figure 11.

### Example 17

A pouch cell was prepared in the same manner as in Examples 1 and 2, except that cathode material Li_{1.0}Ni_{0.8}Co_{0.15}Al_{0.05}O₂ (NCA) (obtained from Hunan Rui Xiang New Material Co., Ltd., Changsha, China) was used instead of NMC333, and additive was not added. A positive electrode slurry was prepared by mixing 91 wt.% pre-treated cathode material, 5 wt.% carbon black (SuperP; Timcal Ltd, Bodio, Switzerland), and 4 wt.% polyacrylonitrile (PAN) (LA 132, Chengdu Indigo Power Sources Co., Ltd., China) in deionized water to form a slurry having a solid content of 55 wt.%. The slurry was homogenized by a planetary stirring mixer (200 L mixer, Chienemei Industry Co. Ltd., China) for 6 hours operated at a stirring speed of 20 rpm and a dispersing speed of 1500 rpm to obtain a homogenized slurry. The formulation of Example 17 is shown in Table 1 below.

The cell was tested galvanostatically at a current density of C/2 at 25 °C on a battery tester between 3.0 V and 4.2 V. The nominal capacity was about 10 Ah. Test result of cyclability performance is shown in Table 2 below and Figure 12.

### Example 18

A pouch cell was prepared in the same manner as in Examples 13 and 14, except that cathode material LiNi_{0.5}Mn_{0.3}Co_{0.2}O₂ (NMC532) (obtained from Hunan Rui Xiang New Material Co. Ltd., Changsha, China) was used instead of LiCoO₂; alginic acid sodium salt (sodium alginate, obtained from Aladdin Industries Corporation, China) and polyacrylonitrile were used instead of polyacrylonitrile as a cathode binder material; and additive was not added. A positive electrode slurry was prepared by mixing 88 wt.% pre-treated cathode material, 6 wt.% carbon black (SuperP; Timcal Ltd, Bodio, Switzerland), 2.5 wt.% alginic acid sodium salt, and 3.5 wt.% polyacrylonitrile (LA 132, Chengdu Indigo Power Sources Co., Ltd., China) in deionized water to form a slurry having a solid content of 50 wt.%. The slurry was homogenized by a planetary stirring mixer (200 L mixer, Chienemei Industry Co. Ltd., China) for 6 hours operated at a stirring speed of 20 rpm and a dispersing speed of 1500 rpm to obtain a homogenized slurry. The formulation of Example 18 is shown in Table 1 below.

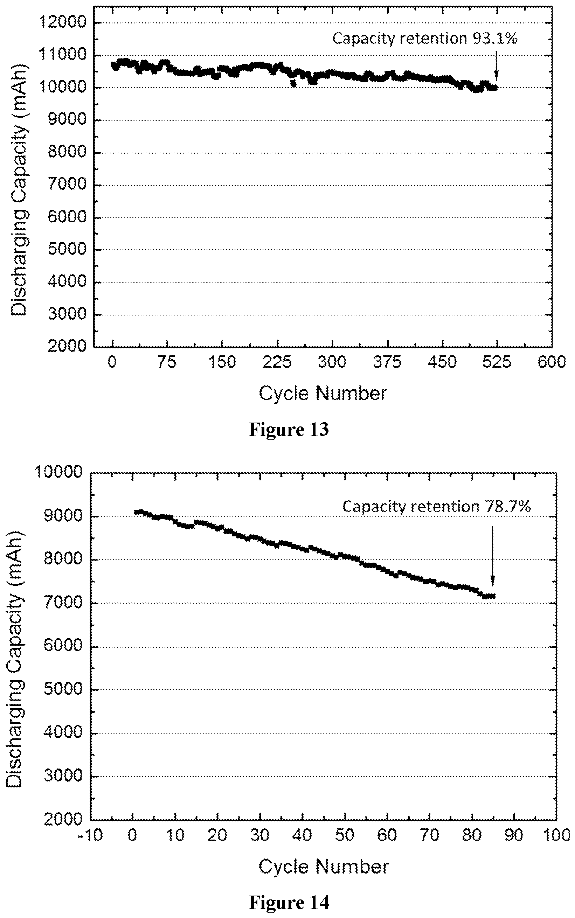

The cell was tested galvanostatically at a current density of C/2 at 25 °C on a battery tester between 3.0 V and 4.2 V. The nominal capacity was about 10.7 Ah. Test result of cyclability performance is shown in Table 2 below and Figure 13.

### Comparative Example 1

A pouch cell was prepared in the same manner as in Examples 13 and 14, except that 1.5 wt.% carboxymethyl cellulose (CMC, BSH-12, DKS Co. Ltd., Japan) and 3.5 wt.% SBR (AL-2001, NIPPON A&L INC., Japan) were used instead of 5 wt.% polyacrylonitrile as a cathode binder material, and 0.01 wt.% solution of acetic acid in water was used instead of a mixture of H₂O and ethanol when pre-treating the cathode material. A particulate cathode material LiCoO₂ (obtained from Xiamen Tungsten CO. Ltd., China) was added to a stirring 0.01 wt.% solution of acetic acid in water (obtained from Aladdin Industries Corporation, China) at room temperature to form a suspension having a solid content of about 2% by weight. The pH of the suspension was measured using a pH meter and the pH was about 3.4. The suspension was further stirred at room temperature for 1 hour. Then the suspension was separated and dried by a 2.45GHz microwave dryer (ZY-4HO, obtained from Zhiya Industrial Microwave Equipment Co., Ltd., Guangdong, China) at 750 W for 5 minutes to obtain a pre-treated cathode material. A positive electrode slurry was prepared by mixing 90 wt.% pre-treated cathode material, 5 wt.% carbon black, 1.5 wt.% carboxymethyl cellulose and 3.5 wt.% SBR in deionized water to form a slurry having a solid content of 50 wt.%. The slurry was homogenized by a planetary stirring mixer (200 L mixer, Chienemei Industry Co. Ltd., China) for 6 hours operated at a stirring speed of 30 rpm and a dispersing speed of 1500 rpm to obtain a homogenized slurry. The formulation of Comparative Example 1 is shown in Table 1 below.

The cell was tested galvanostatically at a current density of C/2 at 25 °C on a battery tester between 3.0 V and 4.2 V. The nominal capacity was about 9.1 Ah.

The cyclability performance of the pouch cell was tested by charging and discharging at a constant current rate of 1C between 3.0 V and 4.2 V. Test result of cyclability performance is shown in Table 2 below and Figure 14.

### Comparative Example 2

A pouch cell was prepared in the same manner as in Comparative Example 1, except that 2 wt.% carboxymethyl cellulose (CMC, BSH-12, DKS Co. Ltd., Japan) and 3 wt.% polyvinyl alcohol (PVA) (obtained from The Nippon Synthetic Chemical Industry Co., Ltd., Japan) were used instead of 1.5 wt.% carboxymethyl cellulose and 3.5 wt.% SBR as a cathode binder material. A positive electrode slurry was prepared by mixing 90 wt.% pre-treated active battery electrode material, 5 wt.% carbon black, 2 wt.% carboxymethyl cellulose and 3 wt.% PVA in deionized water to form a slurry having a solid content of 50 wt.%. The slurry was homogenized by a planetary stirring mixer (200 L mixer, Chienemei Industry Co. Ltd., China) for 6 hours operated at a stirring speed of 30 rpm and a dispersing speed of 1500 rpm to obtain a homogenized slurry. The formulation of Comparative Example 2 is shown in Table 1 below.

The cell was tested galvanostatically at a current density of C/2 at 25 °C on a battery tester between 3.0 V and 4.2 V. The nominal capacity was about 8.2 Ah.

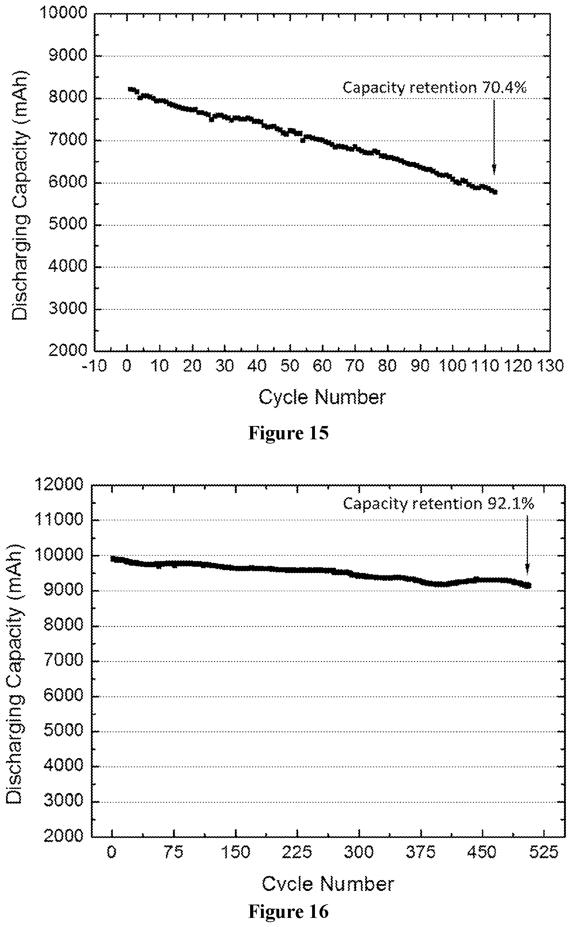

The cyclability performance of the pouch cell was tested by charging and discharging at a constant current rate of 1C between 3.0 V and 4.2 V. Test result of cyclability performance is shown in Table 2 below and Figure 15.

### Comparative Example 3

A pouch cell was prepared in the same manner as in Examples 13 and 14, except that ball mill was used instead of planetary mixer as a homogenizer when preparing the positive electrode slurry, and 0.01 wt.% solution of acetic acid in water was used instead of a mixture of H₂O and ethanol when pre-treating the cathode material. A particulate cathode material LiCoO₂ (obtained from Xiamen Tungsten CO. Ltd., China) was added to a stirring 0.01 wt.% solution of acetic acid in water (obtained from Aladdin Industries Corporation, China) at room temperature to form a suspension having a solid content of about 2% by weight. The pH of the suspension was measured using a pH meter and the pH was about 3.4. The suspension was further stirred at room temperature for 1 hour. Then the suspension was separated and dried by a 2.45GHz microwave dryer (ZY-4HO, obtained from Zhiya Industrial Microwave Equipment Co., Ltd., Guangdong, China) at 750 W for 5 minutes to obtain a pre-treated cathode material. A positive electrode slurry was prepared by mixing 90 wt.% pre-treated cathode material, 5 wt.% carbon black (SuperP; Timcal Ltd, Bodio, Switzerland), and 5 wt.% polyacrylonitrile (PAN) (LA 132, Chengdu Indigo Power Sources Co., Ltd., China) in deionized water to form a slurry having a solid content of 50 wt.%. The slurry was homogenized in a 500 mL container in a planetary-type ball mill (Changsha MITR Instrument & Equipment Co. Ltd., China) with thirty (too many?) zirconium oxide (ZrO₂) balls (fifteen 5 mm and fifteen 15 mm) for 3 hours operated at a rotation speed of 150 rpm and spinning speed of 250 rpm to obtain a homogenized slurry. The formulation of Comparative Example 3 is shown in Table 1 below.

The cell was tested galvanostatically at a current density of C/2 at 25 °C on a battery tester between 3.0 V and 4.2 V. The nominal capacity was about 9.9 Ah.

The cyclability performance of the pouch cell was tested by charging and discharging at a constant current rate of 1C between 3.0 V and 4.2 V. Test result of cyclability performance is shown in Table 2 below and Figure 16.

### Comparative Example 4

A pouch cell was prepared in the same manner as in Comparative Example 1, except that 5 wt.% polyacrylonitrile were used instead of 1.5 wt.% carboxymethyl cellulose and 3.5 wt.% SBR as a cathode binder material. The formulation of Comparative Example 4 is shown in Table 1 below.

The cell was tested galvanostatically at a current density of C/2 at 25 °C on a battery tester between 3.0 V and 4.2 V. The nominal capacity was about 10.1 Ah.

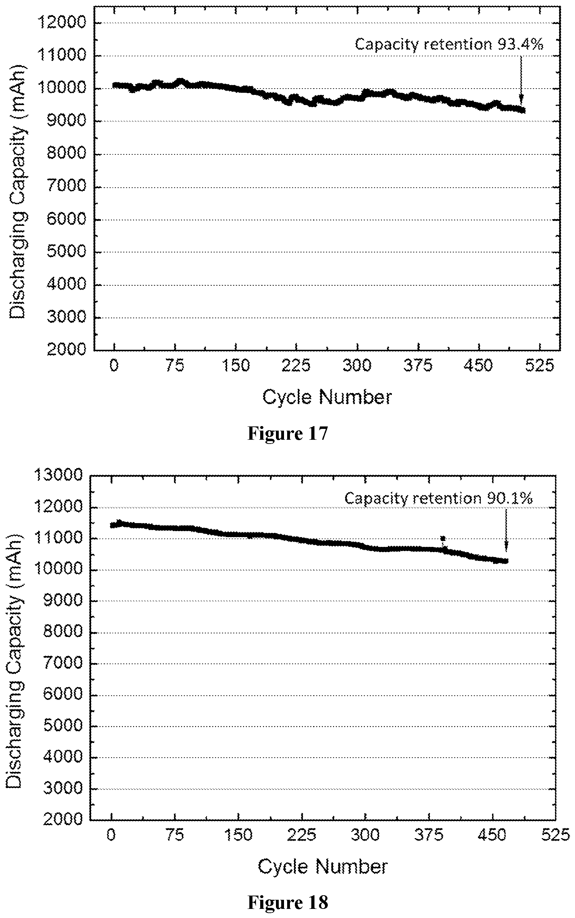

The cyclability performance of the pouch cell was tested by charging and discharging at a constant current rate of 1C between 3.0 V and 4.2 V. Test result of cyclability performance is shown in Table 2 below and Figure 17.

### Comparative Example 5

A pouch cell was prepared in the same manner as in Example 15, except that 0.01 wt.% solution of citric acid in water was used instead of a mixture of H₂O and ethanol when pre-treating the cathode material. A particulate cathode material NMC811 was added to a stirring 0.01 wt.% solution of citric acid in water (obtained from Aladdin Industries Corporation, China) at room temperature to form a suspension having a solid content of about 2% by weight. The pH of the suspension was measured using a pH meter and the pH was about 3.4. The suspension was further stirred at room temperature for 1 hour. Then the suspension was separated and dried by a 2.45GHz microwave dryer (ZY-4HO, obtained from Zhiya Industrial Microwave Equipment Co., Ltd., Guangdong, China) at 750 W for 5 minutes to obtain a pre-treated cathode material. The formulation of Comparative_Example 5 is shown in Table 1 below.

The cell was tested galvanostatically at a current density of C/2 at 25 °C on a battery tester between 3.0 V and 4.2 V. The nominal capacity was about 11.4 Ah.

The cyclability performance of the pouch cell was tested by charging and discharging at a constant current rate of 1C between 3.0 V and 4.2 V. Test result of cyclability performance is shown in Table 2 below and Figure 18.

### Comparative Example 6

A pouch cell was prepared in the same manner as in Example 15, except that the cathode material was not pre-treated. The formulation of Comparative Example 6 is shown in Table 1 below.

The cell was tested galvanostatically at a current density of C/2 at 25 °C on a battery tester between 3.0 V and 4.2 V. The nominal capacity was about 12.5 Ah.

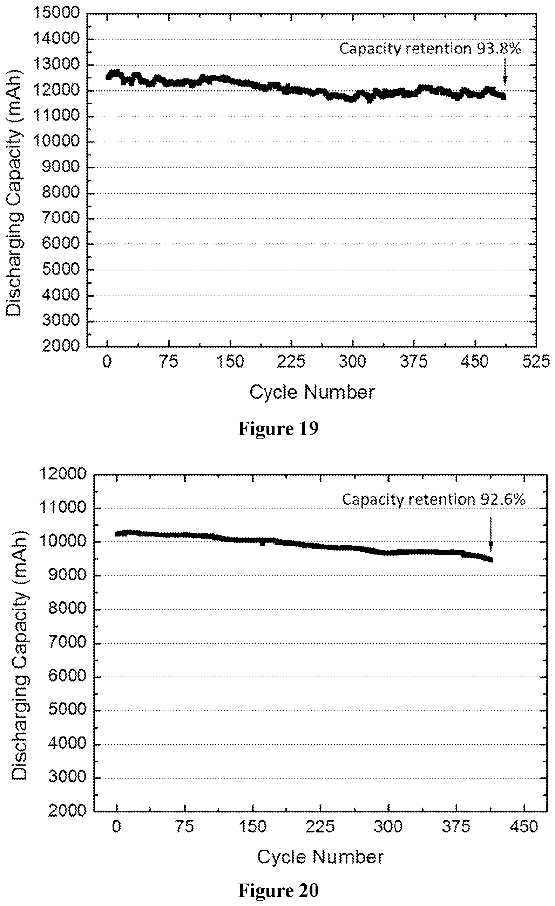

The cyclability performance of the pouch cell was tested by charging and discharging at a constant current rate of 1C between 3.0 V and 4.2 V. Test result of cyclability performance is shown in Table 2 below and Figure 19.

### Comparative Example 7

A pouch cell was prepared in the same manner as in Example 11, except that 0.01 wt.% solution of citric acid in water was used instead of a mixture of H₂O and iso-propanol when pre-treating the cathode material. A particulate cathode material C-S LNMgO was added to a stirring 0.01 wt.% solution of citric acid in water (obtained from Aladdin Industries Corporation, China) at room temperature to form a suspension having a solid content of about 2% by weight. The pH of the suspension was measured using a pH meter and the pH was about 3.6. The suspension was further stirred at room temperature for 1 hour. Then the suspension was separated and dried by a 2.45GHz microwave dryer (ZY-4HO, obtained from Zhiya Industrial Microwave Equipment Co., Ltd., Guangdong, China) at 750 W for 5 minutes to obtain a pre-treated cathode material. The formulation of Comparative Example 7 is shown in Table 1 below.

The cell was tested galvanostatically at a current density of C/2 at 25 °C on a battery tester between 3.0 V and 4.2 V. The nominal capacity was about 10 Ah.

The cyclability performance of the pouch cell was tested by charging and discharging at a constant current rate of 1C between 3.0 V and 4.2 V. Test result of cyclability performance is shown in Table 2 below and Figure 20.

### Example 19

A pouch cell was prepared in the same manner as in Example 13, except that 1.5 wt.% carboxymethyl cellulose (CMC, BSH-12, DKS Co. Ltd., Japan) and 3.5 wt.% SBR (AL-2001, NIPPON A&L INC., Japan) were used instead of 5 wt.% polyacrylonitrile as an anode binder material. The formulation of Example 19 is shown in Table 1 below.

The cell was tested galvanostatically at a current density of C/2 at 25 °C on a battery tester between 3.0 V and 4.2 V. The nominal capacity was about 11.2 Ah.

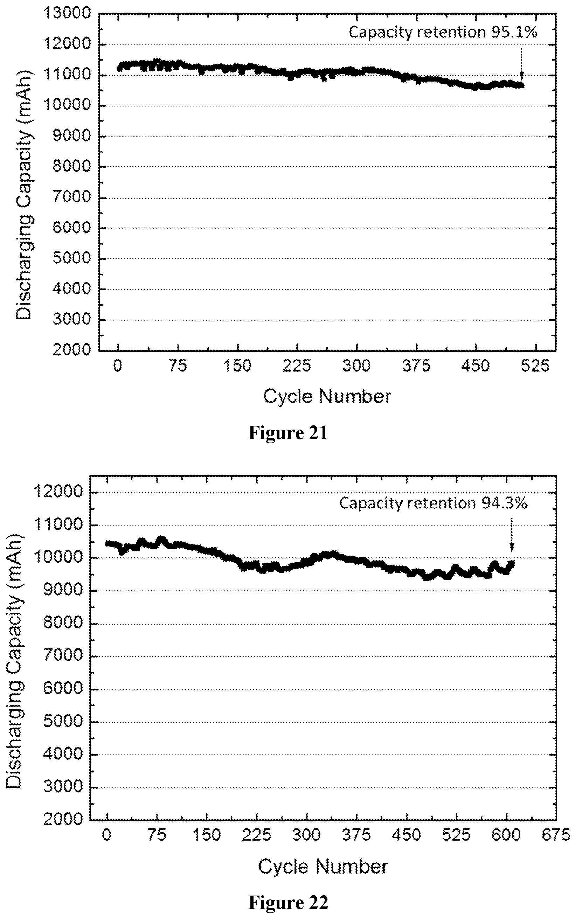

The cyclability performance of the pouch cell was tested by charging and discharging at a constant current rate of 1C between 3.0 V and 4.2 V. Test result of cyclability performance is shown in Table 2 below and Figure 21.

### Example 20

A pouch cell was prepared in the same manner as in Example 13, except that 5 wt.% polyvinylidene fluoride (PVDF; Solef^{®} 5130, obtained from Solvay S.A., Belgium) was used instead of 5 wt.% polyacrylonitrile as an anode binder material; and N-methyl-2-pyrrolidone (NMP; purity of ≥99%, Sigma-Aldrich, USA) was used instead of deionized water as a solvent. A negative electrode slurry was prepared by mixing 90 wt.% hard carbon (HC; 99.5% purity, Ruifute Technology Ltd., Shenzhen, Guangdong, China), 5 wt.% carbon black and 5 wt.% PVDF in NMP to form a slurry having a solid content of 50 wt.%. The slurry was coated onto both sides of a copper foil having a thickness of 9 µm using a transfer coater with an area density of about 15 mg/cm². The coated films on the copper foil were dried at about 87 °C for 8 minute by a 24-meter-long conveyor hot air dryer operated at a conveyor speed of about 3 meter/minute to obtain a negative electrode. The formulation of Example 20 is shown in Table 1 below.

The cell was tested galvanostatically at a current density of C/2 at 25 °C on a battery tester between 3.0 V and 4.2 V. The nominal capacity was about 10.4 Ah.

The cyclability performance of the pouch cell was tested by charging and discharging at a constant current rate of 1C between 3.0 V and 4.2 V. Test result of cyclability performance is shown in Table 2 below and Figure 22.

### Comparative Example 8

A pouch cell was prepared in the same manner as in Example 13, except that a vacuum oven (HSZK-6050, Shanghai Hasuc Instrument Manufacture Co., Ltd., China) was used instead of a microwave dryer for drying the pre-treated cathode material. The pre-treated cathode material was dried in a vacuum oven at 88 °C for 8 hours. The formulation of Comparative Example 8 is shown in Table 1 below.

The cell was tested galvanostatically at a current density of C/2 at 25 °C on a battery tester between 3.0 V and 4.2 V. The nominal capacity was about 10.3 Ah.

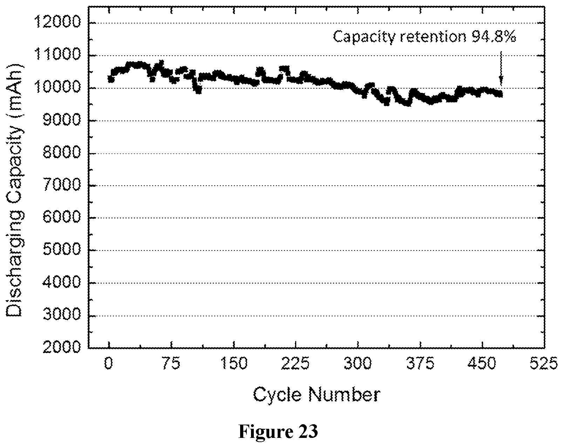

The cyclability performance of the pouch cell was tested by charging and discharging at a constant current rate of 1C between 3.0 V and 4.2 V. Test result of cyclability performance is shown in Table 2 below and Figure 23.

**Table 1**

| Example | Cathode material | Pre-treatment | Cathode slurry | | | Anode slurry | |
|---|---|---|---|---|---|---|---|
| | | | Binder | Solvent | Homogenizer | Binder | Solvent |
| Example 1 | NMC333 | H₂O/ ethanol | PAN | H₂O | Planetary mixer | PAN | H₂O |
| Example 3 | LMO | Acetic acid | PAN | H₂O | Ultrasonic flow cell | PAN | H₂O |
| Example 5 | NMC333 | H₂O | PAN | H₂O | Ultrasonic flow cell | PAN | H₂O |
| Example 7 | LiFePO₄ | Acetic acid | PAN | H₂O | Ultrasonic flow cell | PAN | H₂O |
| Example 9 | C-S NMC532 | H₂O/ methanol | PAN | H₂O | Planetary mixer | PAN | H₂O |
| ¹Example 11 | C-S LNMgO | H₂O/ iso-propanol | PAN | H₂O | Planetary mixer | PAN | H₂O |
| Example 13 | LiCoO₂ | H₂O/ ethanol | PAN | H₂O | Planetary mixer | PAN | H₂O |
| Example 15 | NMC811 | H₂O/ ethanol | PAN | H₂O | Planetary mixer | PAN | H₂O |
| Example 16 | NMC622 | H₂O/ ethanol | PAN | H₂O | Planetary mixer | PAN | H₂O |
| Example 17 | NCA | H₂O/ ethanol | PAN | H₂O | Planetary mixer | PAN | H₂O |
| Example 18 | NMC532 | H₂O/ ethanol | Alginic acid + PAN | H₂O | Planetary mixer | PAN | H₂O |
| Comparative Example 1 | LiCoO₂ | Acetic acid | CMC + SBR | H₂O | Planetary mixer | PAN | H₂O |
| Comparative Example 2 | LiCoO₂ | Acetic acid | CMC + PVA | H₂O | Planetary mixer | PAN | H₂O |
| Comparative Example 3 | LiCoO₂ | Acetic acid | PAN | H₂O | Ball mill | PAN | H₂O |
| Comparative Example 4 | LiCoO₂ | Acetic acid | PAN | H₂O | Planetary mixer | PAN | H₂O |
| Comparative Example 5 | NMC811 | Citric acid | PAN | H₂O | Planetary mixer | PAN | H₂O |
| Comparative Example 6 | NMC811 | / | PAN | H₂O | Planetary mixer | PAN | H₂O |
| Comparative Example 7 | C-S LNMgO | Citric acid | PAN | H₂O | Planetary mixer | PAN | H₂O |

| | | | | | | | |
|---|---|---|---|---|---|---|---|
| Example 19 LiCoO₂ H₂O/ethanol PAN H₂O Planetary mixer CMC+SBR H₂O Example 20 LiCoO₂ H₂O/ethanol PAN H₂O Planetary mixer PVDF NMP ² Comparative Example 8 LiCoO₂ H₂O/ethanol PAN H₂O Planetary mixer PAN H₂O Note: ¹ This Example does not form part of the present invention and serves only as background art. ² The pre-treated cathode material was dried in a vacuum oven. | | | | | | | |

The cyclability performance of the pouch cells of Examples 1-20 and Comparative Examples 1-8 was tested by charging and discharging at a constant current rate of 1C. The capacity retentions of the cells were measured during cycling and estimated by extrapolation based on the plotted results. The measured and estimated values are shown in Table 2 below.

**Table 2**

| Example | Measured values | | Estimated values by extrapolation | |
|---|---|---|---|---|
| | No. of Cycle | Capacity retention (%) | No. of Cycle | Capacity retention (%) |
| Example 2 | 450 | 95.6 | 2,000 | 80.4 |
| Example 4 | 2,000 | 77 | / | / |
| Example 6 | 560 | 94.8 | 2,000 | 81.4 |
| Example 8 | 3,000 | 82.6 | / | / |
| Example 10 | 361 | 98.6 | 2,000 | 92.2 |
| Example 12 | 385 | 98.1 | 2,000 | 90.1 |
| Example 14 | 576 | 94.4 | 2,000 | 80.6 |
| Example 15 | 476 | 95.7 | 2,000 | 81.9 |
| Example 16 | 497 | 94.4 | 2,000 | 77.5 |
| Example 17 | 553 | 93.9 | 2,000 | 77.9 |
| Example 18 | 522 | 93.1 | 2,000 | 73.6 |
| Comparative Example 1 | 85 | 78.7 | / | / |
| Comparative Example 2 | 113 | 70.4 | / | / |
| Comparative Example 3 | 506 | 92.1 | 2000 | 70.0 |
| Comparative Example 4 | 514 | 93.4 | 2,000 | 74.3 |
| Comparative Example 5 | 466 | 90.1 | 2,000 | 57.5 |
| Comparative Example 6 | 485 | 93.8 | 2,000 | 74.4 |
| Comparative Example 7 | 413 | 92.6 | 2,000 | 64.2 |

| | | | | |
|---|---|---|---|---|
| Example 19 508 95.1 2,000 80.7 Example 20 606 94.3 2,000 81.2 Comparative Example 8 472 94.8 2,000 78 | | | | |

The comparison battery cells had a discharge capacity retention less than 80% after only less than 100 cycles when water-soluble binders such as CMC, SBR and PVA were used for preparing the aqueous slurry. In contrast, the batteries of Examples 1-18 had a discharge capacity retention of at least 86% after 1000 cycles.

This excellent cyclability indicates that battery cell made of cathode electrodes prepared by the method disclosed herein can achieve comparable or even better stability compared to battery cell made of cathode and anode electrodes prepared by conventional method involving the use of organic solvents.

## Claims

1. A method of preparing a battery cathode, comprising the steps of:
1) pre-treating a cathode material in a first aqueous solution comprising water and having a pH from about 5.0 to about 8.0 to form a first suspension;
2) drying the first suspension to obtain a pre-treated cathode material;
3) dispersing the pre-treated cathode material, a conductive agent, and a binder material in a second aqueous solution to form a slurry;
4) homogenizing the slurry by a homogenizer to obtain a homogenized slurry;
5) applying the homogenized slurry on a current collector to form a coated film on the current collector; and
6) drying the coated film on the current collector to form the battery cathode at a temperature from about 45 °C to about 100 °C for a time period from about 1 minute to about 30 minutes;
wherein the amount of water in the first aqueous solution is at least 50% by volume and wherein the amount of water in the second aqueous solution is at least 90% by volume;
wherein the cathode material is a lithium transition metal compound selected from the group consisting of LiCoO₂, LiNiO₂, LiNiₓMn_{y}O₂, Li_{1+z}NiₓMn_{y}Co_{1-x-y}O₂, LiNiₓCo_{y}Al_{z}O₂, LiV₂O₅, LiTiS₂, LiMoS₂, LiMnO₂, LiCrO₂, LiMn₂O₄, LiFeO₂, and combinations thereof, wherein each x is independently from 0.3 to 0.8; each y is independently from 0.1 to 0.45; and each z is independently from 0 to 0.2;
wherein the conductive agent is selected from the group consisting of carbon, carbon black, graphite, expanded graphite, graphene, graphene nanoplatelets, carbon fibres, carbon nano-fibers, graphitized carbon flake, carbon tubes, carbon nanotubes, activated carbon, mesoporous carbon, and combinations thereof; and
wherein the binder material is selected from the group consisting of styrene-butadiene rubber (SBR), carboxymethyl cellulose (CMC), polyvinylidene fluoride (PVDF), acrylonitrile copolymer, polyacrylic acid (PAA), polyacrylonitrile, poly(vinylidene fluoride)-hexafluoropropene (PVDF-HFP), latex, a salt of alginic acid, and combinations thereof.

2. A method of preparing a battery cathode, comprising the steps of:
1) pre-treating a cathode material in a first aqueous solution comprising water and having a pH from about 3.0 to about 8.0 to form a first suspension;
2) drying the first suspension to obtain a pre-treated cathode material;
3) dispersing the pre-treated cathode material, a conductive agent, and a binder material in a second aqueous solution to form a slurry;
4) homogenizing the slurry by a homogenizer to obtain a homogenized slurry;
5) applying the homogenized slurry on a current collector to form a coated film on the current collector; and
6) drying the coated film on the current collector to form the battery cathode at a temperature from about 45 °C to about 100 °C for a time period from about 1 minute to about 30 minutes;
wherein the amount of water in the first aqueous solution is at least 50% by volume and wherein the amount of water in the second aqueous solution is at least 90% by volume;
wherein the cathode material is LiFePO₄;
wherein the conductive agent is selected from the group consisting of carbon, carbon black, graphite, expanded graphite, graphene, graphene nanoplatelets, carbon fibres, carbon nano-fibers, graphitized carbon flake, carbon tubes, carbon nanotubes, activated carbon, mesoporous carbon, and combinations thereof; and
wherein the binder material is selected from the group consisting of styrene-butadiene rubber (SBR), carboxymethyl cellulose (CMC), polyvinylidene fluoride (PVDF), acrylonitrile copolymer, polyacrylic acid (PAA), polyacrylonitrile, poly(vinylidene fluoride)-hexafluoropropene (PVDF-HFP), latex, a salt of alginic acid, and combinations thereof.

3. The method of claim 1, wherein the cathode material comprises or is a core-shell composite having a core-shell structure, wherein the shell is a lithium transition metal compound as claimed in claim 1, and the core comprises a lithium transitional metal compound that is different to the shell and is selected from the group consisting of LiCO₂, LiNiO₂, LiNiₓMn_{y}O₂, Li_{1+z}NiₓMn_{y}Co_{1-x-y}O₂, LiNiₓCo_{y}Al_{z}O₂, LiV₂O₅, LiTiS₂, LiMoS₂, LiMnO₂, LiCrO₂, LiMn₂O₄, LiFeO₂, LiFePO₄, and combinations thereof; wherein each x is independently from 0.3 to 0.8; each y is independently from 0.1 to 0.45; and each z is independently from 0 to 0.2.

4. The method of any one of claims 1 to 3, wherein the cathode material is doped with a dopant selected from the group consisting of Fe, Ni, Mn, Al, Mg, Zn, Ti, La, Ce, Sn, Zr, Ru, Si, Ge, and combinations thereof.

5. The method of claim 1 or claim 2, wherein the first aqueous solution comprises one or more acids selected from the group consisting of H₂SO₄, HNO₃, H₃PO₄, HCOOH, CH₃COOH, H₃C₆H₅O₇, H₂C₂O₄, C₆H₁₂O₇, C₄H₆O₅, and combinations thereof.

6. The method of claim 1 or claim 2, wherein the first aqueous solution further comprises ethanol, isopropanol, methanol, acetone, n-propanol, t-butanol, or a combination thereof.

7. The method of claim 1 or claim 2, wherein the first suspension is dried by a double-cone vacuum dryer, a microwave dryer, or a microwave vacuum dryer.

8. The method of claim 1 or claim 2, wherein the conductive agent is pre-treated in a basic solution for a time period from about 30 minutes to about 2 hours and wherein the basic solution comprises a base selected from the group consisting of H₂O₂, LiOH, NaOH, KOH, NH₃•H₂O, Be(OH)₂, Mg(OH)₂, Ca(OH)₂, Li₂CO₃, Na₂CO₃, NaHCO₃, K₂CO₃, KHCO₃, and combinations thereof.

9. The method of claim 1 or claim 2, wherein the conductive agent is dispersed in a third aqueous solution to form a second suspension prior to step 3).

10. The method of claim 1 or claim 2, wherein the salt of alginic acid comprises a cation selected from Na, Li, K, Ca, NH₄, Mg, Al, or a combination thereof.

11. The method of claim 1 or claim 2, wherein the binder material is dissolved in a fourth aqueous solution to form a resulting solution prior to step 3).

12. The method of claim 1 or claim 2, wherein the slurry further comprises a dispersing agent selected from the group consisting of ethanol, isopropanol, n-propanol, t-butanol, n-butanol, lithium dodecyl sulfate, trimethylhexadecyl ammonium chloride, alcohol ethoxylate, nonylphenol ethoxylate, sodium dodecylbenzene sulfonate, sodium stearate, and combinations thereof.

13. The method of claim 1 or claim 2, wherein the homogenizer is a stirring mixer, a blender, a mill, an ultrasonicator, a rotor-stator homogenizer, or a high pressure homogenizer.

14. The method of claim 1 or claim 2, wherein the homogenized slurry is applied on the current collector using a doctor blade coater, a slot-die coater, a transfer coater, or a spray coater.

15. The method of claim 1 or claim 2, wherein the coated film is dried by a conveyor hot air drying oven, a conveyor resistance drying oven, a conveyor inductive drying oven, or a conveyor microwave drying oven for a time period from about 2 minutes to about 10 minutes at a temperature from about 55 °C to about 75 °C.

16. The method of claim 1 or claim 2, wherein step 3) is heated and performed at a temperature from about 30 °C to about 80 °C.

17. The method of claim 1 or claim 2, wherein the coated film on the current collector has a thickness of 20 µm to about 100 µm, or from about 10 µm to about 300 µm.

## Patentansprüche

1. Verfahren zur Herstellung einer Batteriekathode, umfassend die Schritte von:
1) Vorbehandlung eines Kathodenmaterials in einer ersten wässrigen Lösung, die Wasser umfasst und einen pH-Wert von etwa 5,0 bis etwa 8,0 aufweist, um eine erste Aufschlämmung zu bilden;
2) Trocknen der ersten Aufschlämmung, um ein vorbehandeltes Kathodenmaterial zu erhalten;
3) Dispergieren des vorbehandelten Kathodenmaterials, eines leitfähigen Mittels und eines Bindematerials in einer zweiten wässrigen Lösung, um eine Aufschlämmung zu bilden;
4) Homogenisieren der Aufschlämmung durch einen Homogenisator, um eine homogenisierte Aufschlämmung zu erhalten;
5) Aufbringen der homogenisierten Aufschlämmung auf einen Stromabnehmer, um einen beschichteten Film auf dem Stromabnehmer zu bilden; und
6) Trocknen des beschichteten Films auf dem Stromabnehmer zur Bildung der Batteriekathode bei einer Temperatur von etwa 45 °C bis etwa 100 °C über einen Zeitraum von etwa 1 Minute bis etwa 30 Minuten;
wobei die Wassermenge in der ersten wässrigen Lösung mindestens 50 Volumenprozent beträgt und wobei die Wassermenge in der zweiten wässrigen Lösung mindestens 90 Volumenprozent beträgt;
wobei das Kathodenmaterial eine Lithium-Übergangsmetallverbindung ist, die aus der Gruppe ausgewählt ist, gebildet aus LiCoO₂, LiNiO₂, LiNiₓMn_{y}O₂, Li_{1+z}NiₓMn_{y}Co_{1-x-y}O₂, LiNiₓCo_{y}Al_{z}O₂, LiV₂O₅, LiTiS₂, LiMoS₂, LiMnO₂, LiCrO₂, LiMn₂O₄, LiFeO₂ und Kombinationen davon, wobei jedes x unabhängig von 0,3 bis 0,8 ist; jedes y unabhängig von 0,1 bis 0,45 ist; und jedes z unabhängig von 0 bis 0,2 ist;
wobei das leitfähige Mittel aus der Gruppe ausgewählt ist, gebildet aus Kohlenstoff, Ruß, Graphit, expandiertem Graphit, Graphen, Graphen-Nanoplättchen, Kohlenstofffasern, Kohlenstoff-Nanofasern, graphitierten Kohlenstoffflocken, Kohlenstoffröhren, Kohlenstoff-Nanoröhren, Aktivkohle, mesoporösem Kohlenstoff und Kombinationen davon; und
wobei das Bindemittelmaterial ausgewählt ist aus der Gruppe gebildet aus StyrolButadien-Kautschuk (SBR), Carboxymethylcellulose (CMC), Polyvinylidenfluorid (PVDF), Acrylnitril-Copolymer, Polyacrylsäure (PAA), Polyacrylnitril, Poly(vinylidenfluorid)-hexafluorpropen (PVDF-HFP), Latex, einem Salz von Alginsäure und Kombinationen davon.

2. Verfahren zur Herstellung einer Batteriekathode, umfassend die Schritte von:
1) Vorbehandeln eines Kathodenmaterials in einer ersten wässrigen Lösung, die Wasser umfasst und einen pH-Wert von etwa 3,0 bis etwa 8,0 aufweist, um eine erste Aufschlämmung zu bilden;
2) Trocknen der ersten Aufschlämmung, um ein vorbehandeltes Kathodenmaterial zu erhalten;
3) Dispergieren des vorbehandelten Kathodenmaterials, eines leitfähigen Mittels und eines Bindemittels in einer zweiten wässrigen Lösung, um eine Aufschlämmung zu bilden;
4) Homogenisieren der Aufschlämmung durch einen Homogenisator, um eine homogenisierte Aufschlämmung zu erhalten;
5) Aufbringen der homogenisierten Aufschlämmung auf einen Stromabnehmer, um einen beschichteten Film auf dem Stromabnehmer zu bilden; und
6) Trocknen des beschichteten Films auf dem Stromabnehmer zur Bildung der Batteriekathode bei einer Temperatur von etwa 45 °C bis etwa 100 °C über einen Zeitraum von etwa 1 Minute bis etwa 30 Minuten;
wobei die Wassermenge in der ersten wässrigen Lösung mindestens 50 Volumenprozent beträgt und wobei die Wassermenge in der zweiten wässrigen Lösung mindestens 90 Volumenprozent beträgt;
wobei das Kathodenmaterial LiFePO₄ ist;
wobei das leitfähige Mittel ausgewählt ist aus der Gruppe gebildet aus Kohlenstoff, Ruß, Graphit, expandiertem Graphit, Graphen, Graphen-Nanoplättchen, Kohlenstofffasern, Kohlenstoff-Nanofasem, graphitierten Kohlenstoffflocken, Kohlenstoffröhren, Kohlenstoff-Nanoröhren, Aktivkohle, mesoporösem Kohlenstoff und Kombinationen davon; und
wobei das Bindemittelmaterial ausgewählt ist aus der Gruppe gebildet aus StyrolButadien-Kautschuk (SBR), Carboxymethylcellulose (CMC), Polyvinylidenfluorid (PVDF), Acrylnitril-Copolymer, Polyacrylsäure (PAA), Polyacrylnitril, Poly(vinylidenfluorid)-hexafluorpropen (PVDF-HFP), Latex, einem Salz von Alginsäure und Kombinationen davon.

3. Verfahren nach Anspruch 1, wobei das Kathodenmaterial einen Kern-Schale-Verbundstoff mit einer Kern-Schale-Struktur umfasst oder ein solcher ist, wobei die Schale eine Lithium-Übergangsmetallverbindung wie in Anspruch 1 ist, und der Kern eine Lithium-Übergangsmetallverbindung umfasst, die sich von der Schale unterscheidet und ausgewählt ist aus der Gruppe gebildet aus LiCO₂, LiNiO₂, LiNiₓMn_{y}O₂, Li_{1+z}NiₓMn_{y}CO_{1-x-y}O₂, LiNiₓCO_{y}Al_{z}O₂, LiV₂O₅, LiTiS₂, LiMoS₂, LiMnO₂, LiCrO₂, LiMn₂O₄, LiFeO₂, LiFePO₄ und Kombinationen davon; wobei jedes x unabhängig von 0,3 bis 0,8 ist; jedes y unabhängig von 0,1 bis 0,45 ist; und jedes z unabhängig von 0 bis 0,2 ist.

4. Verfahren nach einem der Ansprüche 1 bis 3, wobei das Kathodenmaterial mit einem Dotierstoff dotiert ist, der ausgewählt ist aus der Gruppe gebildet aus Fe, Ni, Mn, Al, Mg, Zn, Ti, La, Ce, Sn, Zr, Ru, Si, Ge und Kombinationen davon.

5. Verfahren nach Anspruch 1 oder Anspruch 2, wobei die erste wässrige Lösung eine oder mehrere Säuren umfasst, die aus der Gruppe ausgewählt sind, gebildet aus H₂SO₄, HNO₃, H₃PO₄, HCOOH, CH₃COOH, H₃C₆H₅O₇, H₂C₂O₄, C₆H₁₂O₇, C₄H₆O₅ und Kombinationen davon.

6. Verfahren nach Anspruch 1 oder Anspruch 2, wobei die erste wässrige Lösung ferner Ethanol, Isopropanol, Methanol, Aceton, n-Propanol, t-Butanol oder eine Kombination davon umfasst.

7. Verfahren nach Anspruch 1 oder Anspruch 2, wobei die erste Aufschlämmung mit einem Doppelkonus-Vakuumtrockner, einem Mikrowellentrockner oder einem Mikrowellen-Vakuumtrockner getrocknet wird.

8. Verfahren nach Anspruch 1 oder 2, wobei das leitfähige Mittel in einer basischen Lösung für einen Zeitraum von etwa 30 Minuten bis etwa 2 Stunden vorbehandelt wird und wobei die basische Lösung eine Base umfasst, die ausgewählt ist aus der Gruppe gebildet aus H₂O₂, LiOH, NaOH, KOH, NH₃·H₂O, Be(OH)₂, Mg(OH)₂, Ca(OH)₂, Li₂CO₃, Na₂CO₃, NaHCO₃, K₂CO₃, KHCO₃ und Kombinationen davon.

9. Verfahren nach Anspruch 1 oder Anspruch 2, wobei das leitfähige Mittel vor Schritt 3) in einer dritten wässrigen Lösung dispergiert wird, um eine zweite Aufschlämmung zu bilden.

10. Verfahren nach Anspruch 1 oder 2, wobei das Salz von Alginsäure ein Kation umfasst, ausgewählt aus Na, Li, K, Ca, NH₄, Mg, Al oder einer Kombination davon.

11. Verfahren nach Anspruch 1 oder 2, wobei das Bindemittelmaterial in einer vierten wässrigen Lösung gelöst wird, um eine resultierende Lösung vor Schritt 3) zu bilden.

12. Verfahren nach Anspruch 1 oder 2, wobei die Aufschlämmung ferner ein Dispergiermittel umfasst, das aus der Gruppe ausgewählt ist, gebildet aus Ethanol, Isopropanol, n-Propanol, t-Butanol, n-Butanol, Lithiumdodecylsulfat, Trimethylhexadecyl-Ammoniumchlorid, Alkoholethoxylat, Nonylphenolethoxylat, Natriumdodecylenzolsulfonat, Natriumstearat und Kombinationen davon.

13. Verfahren nach Anspruch 1 oder Anspruch 2, wobei der Homogenisator ein Rührmischer, einen Mixer, eine Mühle, einen Ultraschallgenerator, ein Rotor-Stator-Homogenisator oder ein Hochdruckhomogenisator ist.

14. Verfahren nach Anspruch 1 oder 2, wobei die homogenisierte Aufschlämmung auf den Stromabnehmer unter Verwendung eines Rakelbeschichters, eines Schlitzdüsenbeschichters, eines Transferbeschichters oder eines Sprühbeschichters aufgebracht wird.

15. Verfahren nach Anspruch 1 oder 2, wobei der beschichtete Film mit einem Heißluft-Trockenofen-Förderer, einem Widerstands-Trockenofen-Förderer, einem Induktions-Trockenofen-Förderer oder einem Mikrowellen-Trockenofen-Förderer für einen Zeitraum von etwa 2 Minuten bis etwa 10 Minuten bei einer Temperatur von etwa 55 °C bis etwa 75 °C getrocknet wird.

16. Verfahren nach Anspruch 1 oder Anspruch 2, wobei Schritt 3) bei einer Temperatur von etwa 30 °C bis etwa 80 °C erhitzt und durchgeführt wird.

17. Verfahren nach Anspruch 1 oder 2, wobei der beschichtete Film auf dem Stromabnehmer eine Dicke von 20 µm bis etwa 100 µm oder von etwa 10 µm bis etwa 300 µm aufweist.

## Revendications

1. Un procédé de préparation d'une cathode de batterie, comprenant les étapes consistant à :
1) prétraiter un matériau de cathode dans une première solution aqueuse comprenant de l'eau et ayant un pH d'environ 5,0 à environ 8,0 pour former une première suspension ;
2) sécher la première suspension pour obtenir un matériau de cathode prétraité ;
3) disperser le matériau de cathode prétraité, un agent conducteur et un matériau liant dans une deuxième solution aqueuse pour former une bouillie ;
4) homogénéiser la bouillie par un homogénéisateur pour obtenir une bouillie homogénéisée ;
5) appliquer la bouillie homogénéisée sur un collecteur de courant pour former un film enduit sur le collecteur de courant ; et
6) sécher le film enduit sur le collecteur de courant de façon à former la cathode de batterie à une température d'environ 45°C à environ 100°C pendant une période d'environ 1 minute à environ 30 minutes ;
la quantité d'eau dans la première solution aqueuse est d'au moins 50 % en volume et la quantité d'eau dans la deuxième solution aqueuse est d'au moins 90 % en volume ;
le matériau de cathode est un composé de métal de transition au lithium choisi dans le groupe constitué de LiCoO₂, LiNiO₂, LiNiₓMn_{y}O₂, Li_{1+z}NiₓMn_{y}Co_{1-x-y}O₂, LiNiₓCo_{y}Al_{z}O₂, LiV₂O₅, LiTiS₂, LiMoS₂, LiMnO₂, LiCrO₂, LiMn₂O₄, LiFeO₂, et des combinaisons de ceux-ci, chaque x valant indépendamment de 0,3 à 0,8 ; chaque y vaut indépendamment de 0,1 à 0,45 ; et chaque z vaut indépendamment de 0 à 0,2 ;
l'agent conducteur est choisi dans le groupe constitué du carbone, du noir de carbone, du graphite, du graphite expansé, du graphène, des nanoplaquettes de graphène, des fibres de carbone, des nanofibres de carbone, des flocons de carbone graphitisés, des tubes de carbone, des nanotubes de carbone, du charbon actif, du carbone mésoporeux, et des combinaisons de ceux-ci ; et
le matériau liant est choisi dans le groupe constitué du caoutchouc styrène-butadiène (SBR), de la carboxyméthylcellulose (CMC), du fluorure de polyvinylidène (PVDF), du copolymère d'acrylonitrile, de l'acide polyacrylique (PAA), du polyacrylonitrile, du poly(fluorure de vinylidène)-hexafluoropropène (PVDF-HFP), du latex, d'un sel d'acide alginique et des combinaisons de ceux-ci.

2. Un procédé de préparation d'une cathode de batterie, comprenant les étapes consistant à :
1) prétraiter un matériau de cathode dans une première solution aqueuse comprenant de l'eau et ayant un pH d'environ 3,0 à environ 8,0 pour former une première suspension ;
2) sécher la première suspension pour obtenir un matériau de cathode prétraité ;
3) disperser le matériau de cathode prétraité, un agent conducteur et un matériau liant dans une deuxième solution aqueuse pour former une bouillie ;
4) homogénéiser la bouillie par un homogénéisateur pour obtenir une bouillie homogénéisée ;
5) appliquer la bouillie homogénéisée sur un collecteur de courant de façon à former un film enduit sur le collecteur de courant ; et
6) sécher le film enduit sur le collecteur de courant pour former la cathode de batterie à une température d'environ 45°C à environ 100°C pendant une période d'environ 1 minute à environ 30 minutes ;
la quantité d'eau dans la première solution aqueuse est d'au moins 50 % en volume et la quantité d'eau dans la deuxième solution aqueuse est d'au moins 90 % en volume ;
le matériau de cathode est LiFePO₄ ;
l'agent conducteur est choisi dans le groupe constitué du carbone, du noir de carbone, du graphite, du graphite expansé, du graphène, des nanoplaquettes de graphène, des fibres de carbone, des nanofibres de carbone, des flocons de carbone graphitisés, des tubes de carbone, des nanotubes de carbone, du charbon actif, du carbone mésoporeux, et des combinaisons de ceux-ci ; et
le matériau liant est choisi dans le groupe constitué du caoutchouc styrène-butadiène (SBR), de la carboxyméthylcellulose (CMC), du fluorure de polyvinylidène (PVDF), du copolymère d'acrylonitrile, de l'acide polyacrylique (PAA), du polyacrylonitrile, du poly(fluorure de vinylidène)-hexafluoropropène (PVDF-HFP), du latex, d'un sel d'acide alginique et des combinaisons de ceux-ci.

3. Le procédé selon la revendication 1, dans lequel le matériau de cathode comprend ou est un composite coeur-coquille ayant une structure coeur-coquille, dans lequel la coquille est un composé de métal de transition au lithium selon la revendication 1, et le coeur comprend un composé métallique de transition au lithium différent de la coquille et choisi dans le groupe constitué de LiCO₂, LiNiO₂, LiNiₓMn_{y}O₂, Li_{1+z}NiₓMn_{y}Co_{1-x-y}O₂, LiNiₓCo_{y}Al_{z}O₂, LiV₂O₅, LiTiS₂, LiMoS₂, LiMnO₂, LiCrO₂, LiMn₂O₄, LiFeO₂, LiFePO₄, et des combinaisons de ceux-ci ; chaque x vaut indépendamment de 0,3 à 0,8 ; chaque y vaut indépendamment de 0,1 à 0,45 ; et chaque z vaut indépendamment de 0 à 0,2.

4. Le procédé selon l'une quelconque des revendications 1 à 3, dans lequel le matériau de cathode est dopé avec un dopant choisi dans le groupe constitué de Fe, Ni, Mn, Al, Mg, Zan, Ti, La, Ce, Sn, Zr, Ru, Si, Ge et leurs combinaisons.

5. Le procédé selon la revendication 1 ou la revendication 2, dans lequel la première solution aqueuse comprend un ou plusieurs acides choisis dans le groupe constitué de H₂SO₄, HNO₃, H₃PO₄, HCOOH, CH₃COOH, H₃C₆H₅O₇, H₂C₂O₄, Co₆H₁₂O₇, C₄H₆O5, et des combinaisons de ceux-ci.

6. Le procédé selon la revendication 1 ou la revendication 2, dans lequel la première solution aqueuse comprend en outre de l'éthanol, de l'isopropanol, du méthanol, de l'acétone, du n-propanol, du t-butanol ou une combinaison de ceux-ci.

7. Le procédé selon la revendication 1 ou revendication 2, dans lequel la première suspension est séchée par un sécheur sous vide à double cône, un sécheur à micro-ondes ou un sécheur sous vide à micro-ondes.

8. Le procédé selon la revendication 1 ou la revendication 2, dans lequel l'agent conducteur est prétraité dans une solution basique pendant une période de temps d'environ 30 minutes à environ 2 heures et dans lequel la solution basique comprend une base choisie dans le groupe constitué de H₂O₂, LiOH, NaOH, KOH, NH₃•H₂O, Be(OH)₂, Mg(OH)₂, Ca(OH), Li₂CO₃, Na₂CO₃, NaHCO₃, K₂CO₃, KHCO₃, et des combinaisons de ceux-ci.

9. Le procédé selon la revendication 1 ou la revendication 2, dans lequel l'agent conducteur est dispersé dans une troisième solution aqueuse pour former une deuxième suspension avant l'étape 3).

10. Le procédé selon la revendication 1 ou la revendication 2, dans lequel le sel d'acide alginique comprend un cation choisi parmi Na, Li, K, Ca, NH₄, Mg, Al, ou une combinaison de ceux-ci.

11. Le procédé selon la revendication 1 ou la revendication 2, dans lequel le matériau liant est dissous dans une quatrième solution aqueuse pour former une solution résultante avant l'étape 3).

12. Le procédé selon la revendication 1 ou la revendication 2, dans lequel la bouillie comprend en outre un agent dispersant choisi dans le groupe constitué de l'éthanol, de l'isopropanol, du n-propanol, du t-butanol, du n-butanol, du dodécyl sulfate de lithium, du chlorure de triméthythexadécylammonium, de l'alcool éthoxylate, de l'éthoxylate de nonylphénol, du dodécylbenzène sulfonate de sodium, du stéarate de sodium et des combinaisons de ceux-ci.

13. Le procédé selon la revendication 1 ou la revendication 2, dans lequel l'homogénéisateur est un mélangeur agitateur, un mélangeur, un broyeur, un ultrasoniseur, un homogénéisateur à rotor-stator, ou un homogénéisateur haute pression.

14. Le procédé selon la revendication 1 ou la revendication 2, dans lequel la bouillie homogénéisée est appliquée sur le collecteur de courant en utilisant une coucheuse à racle, une coucheuse à filière à fente, une coucheuse par transfert ou une coucheuse par pulvérisation.

15. Le procédé selon la revendication 1 ou la revendication 2, dans lequel le film enduit est séché par un four de séchage à air chaud à convoyeur, un four de séchage à résistance à convoyeur, un four de séchage inductif à convoyeur ou un four de séchage à micro-ondes à convoyeur pendant une période de temps d'environ 2 minutes à environ 10 minutes à une température d'environ 55°C à environ 75°C.

16. Le procédé selon la revendication 1 ou la revendication 2, dans lequel l'étape 3) est chauffée et réalisée à une température d'environ 30°C à environ 80°C.

17. Le procédé selon la revendication 1 ou la revendication 2, dans lequel le film enduit sur le collecteur de courant a une épaisseur d'environ 20 µm à environ 100 µm, ou d'environ 10 µm à environ 300 µm.
